(19) Europäisches Patentamt / European Patent Office / Office européen des brevets

(11) **EP 1 792 463 B1**

# (12) FASCICULE DE BREVET EUROPEEN

(45) Date de publication et mention
de la délivrance du brevet:
**30.12.2009   Bulletin 2009/53**

(21) Numéro de dépôt: **05802554.5**

(22) Date de dépôt: **16.09.2005**

(51) Int Cl.:
*H04L 27/38* (2006.01)       *H04L 1/00* (2006.01)
*H04L 27/26* (2006.01)

(86) Numéro de dépôt international:
**PCT/FR2005/002301**

(87) Numéro de publication internationale:
**WO 2006/032768 (30.03.2006 Gazette 2006/13)**

(54) **PROCEDE D'ESTIMATION DE LA PHASE ET DU GAIN DE DONNEES D'OBSERVATION TRANSMISES SUR UN CANAL DE TRANSMISSION EN MODULATION QAM**

VERFAHREN ZUR SCHÄTZUNG DER PHASE UND DES PEGELS VON ÜBER EINEN QAM-MODULIERTEN ÜBERTRAGUNGSKANAL ÜBERTRAGENEN SDATEN

METHOD FOR ESTIMATING THE PHASE AND THE GAIN OF OBSERVATION DATA TRANSMITTED OVER A QAM-MODULATED TRANSMISSION CHANNEL

(84) Etats contractants désignés:
**AT BE BG CH CY CZ DE DK EE ES FI FR GB GR HU IE IS IT LI LT LU LV MC NL PL PT RO SE SI SK TR**

(30) Priorité:  **20.09.2004  FR 0409928**

(43) Date de publication de la demande:
**06.06.2007   Bulletin 2007/23**

(73) Titulaires:
- **Centre National de la Recherche Scientifique (C.N.R.S)**
  **75016 Paris (FR)**
- **ECOLE NORMALE SUPERIEURE DE CACHAN**
  **94235 Cachan Cedex (FR)**
- **INSTITUT NATIONAL POLYTECHNIQUE DE GRENOBLE**
  **38000 Grenoble (FR)**

(72) Inventeurs:
- **GELLER, Benoît**
  **F-75005 PARIS (FR)**
- **BARBOT, Jean-Pierre**
  **F-92130 ISSY-LES-MOULINEAUX (FR)**
- **BROSSIER, Jean-Marc**
  **F-38400 SAINT MARTIN D'HERES (FR)**
- **VANSTRACEELE, Christophe**
  **F-25000 BESANCON (FR)**

(74) Mandataire: **Habasque, Etienne J. Jean-François et al**
**Cabinet Lavoix**
**2, place d'Estienne d'Orves**
**75441 Paris Cedex 09 (FR)**

(56) Documents cités:
- **CIONI S ET AL: "Turbo embedded estimation with imperfect phase/frequency recovery" ICC 2003. 2003 IEEE INTERNATIONAL CONFERENCE ON COMMUNICATIONS. ANCHORAGE, AK, MAY 11 - 15, 2003, IEEE INTERNATIONAL CONFERENCE ON COMMUNICATIONS, NEW YORK, NY : IEEE, US, vol. VOL. 1 OF 5, 11 mai 2003 (2003-05-11), pages 2385-2389, XP010642874 ISBN: 0-7803-7802-4**
- **OH W ET AL: "JOINT DECODING AND CARRIER PHASE RECOVERY ALGORITHM FOR TURBO CODES" IEEE COMMUNICATIONS LETTERS, IEEE SERVICE CENTER, PISCATAWAY,US, US, vol. 5, no. 9, septembre 2001 (2001-09), pages 375-377, XP001107973 ISSN: 1089-7798**
- **NOELS N ET AL: "Turbo synchronization : an EM algorithm interpretation" ICC 2003. 2003 IEEE INTERNATIONAL CONFERENCE ON COMMUNICATIONS. ANCHORAGE, AK, MAY 11 - 15, 2003, IEEE INTERNATIONAL CONFERENCE ON COMMUNICATIONS, NEW YORK, NY : IEEE, US, vol. VOL. 1 OF 5, 11 mai 2003 (2003-05-11), pages 2933-2937, XP010642982 ISBN: 0-7803-7802-4**

- **VANSTRACEELE C ET AL: "A new iterative phase tracking scheme" INFORMATION, COMMUNICATIONS AND SIGNAL PROCESSING, 2003 AND FOURTH PACIFIC RIM CONFERENCE ON MULTIMEDIA. PROCEEDINGS OF THE 2003 JOINT CONFERENCE OF THE FOURTH INTERNATIONAL CONFERENCE ON SINGAPORE 15-18 DEC. 2003, PISCATAWAY, NJ, USA,IEEE, vol. 1, 15 décembre 2003 (2003-12-15), pages 578-581, XP010702175 ISBN: 0-7803-8185-8**

- **NISSILA M J ET AL: "An EM approach to carrier phase recovery in AWGN channel" ICC 2001. 2001 IEEE INTERNATIONAL CONFERENCE ON COMMUNICATIONS. CONFERENCE RECORD. HELSINKY, FINLAND, JUNE 11 - 14, 2001, IEEE INTERNATIONAL CONFERENCE ON COMMUNICATIONS, NEW YORK, NY : IEEE, US, vol. VOL. 1 OF 10, 11 juin 2001 (2001-06-11), pages 2199-2203, XP010553707 ISBN: 0-7803-7097-1**

**Description**

Dans les systèmes de communication numérique actuels, un signal numérique à transmettre est converti en un signal analogique à temps continu, lequel est alors transmis via un milieu de propagation physique, désigné canal de transmission, tel que onde radio dans l'air, onde lumineuse dans une fibre optique par exemple. En réception, le signal reçu, soumis à l'interaction physique du canal de transmission, est traité et converti sous une forme numérique.

Les étapes mises en oeuvre à l'émission comprennent habituellement :

- transformation de la suite de valeurs binaires, bits, à transmettre en une suite de symboles complexes, appartenant à un alphabet fini, représentable sous forme d'une constellation dans le plan complexe ;
- transformation de la suite de symboles en une forme d'onde à temps continu en bande de base dont le spectre est centré autour de la fréquence zéro ;
- translation, par changement de fréquence, autour d'une fréquence porteuse.

A la réception, les opérations duales sont exécutées :

- retour en bande de base, par translation inverse, au moyen d'un démodulateur complexe ;
- transformation de la forme d'onde à temps continu en bande de base en une suite de valeurs complexes ;
- restitution des valeurs binaires transmises.

Les opérations de translation, à l'émission, et de retour en bande de base, à la réception, sont pilotées par des oscillateurs, distincts et indépendants, l'un à l'émission, l'autre à la réception. Les fréquences et a fortiori les phases de ces oscillateurs ne peuvent donc jamais coïncider parfaitement. Une erreur de phase, variable dans le temps, subsiste en général.

Bien que le gros de l'erreur précitée soit, de manière habituelle, compensé au moyen d'un dispositif analogique, tel qu'une boucle à verrouillage de phase appliquée au niveau des circuits de changement de fréquence, il subsiste toujours un résidu de fréquence porteuse en bande de base, et finalement d'erreur de phase, en sortie du démodulateur complexe.

L'écart en fréquence ou/et en phase affectant les oscillateurs à l'émission et à la réception constitue un élément perturbateur venant introduire un déphasage parasite sur les observations du signal délivré en sortie du démodulateur complexe.

D'autres facteurs peuvent contribuer à accentuer ce déphasage parasite, notamment le temps de propagation requis par le signal pour traverser le canal de transmission, tout mouvement relatif entre l'émetteur et le récepteur, étant générateur d'un effet Doppler, lequel tend lui aussi à introduire un déphasage perturbateur.

Il apparaît indispensable de compenser toute dérive de phase de manière à pouvoir traiter convenablement le signal reçu, afin d'extraire et reconnaître les symboles émis, avec un bon degré de certitude.

Les techniques de compensation de dérive de phase, connues de l'art antérieur seront explicitées en référence au signal en bande de base, vis-à-vis duquel l'effet du déphasage parasite $\theta_k$ introduit sur les données d'observation $y_k$, données complexes, délivrées en sortie du démodulateur complexe dans le récepteur peut être exprimé par la relation :

$$y_k = a_k e^{i\theta_k} + b_k \qquad (1)$$

Dans cette relation, $a_k$ désigne le symbole complexe émis, appartenant à l'alphabet fini $\{Q1, Q2,..., QM\}$ à M éléments, en modulation QAM à M états, pour Quadrature Amplitude Modulation, $a_k \in \{Q1, Q2,..., Q_M\}, M = 2^N$, N désignant la longueur des paquets binaires servant à construire un symbole complexe $a_k$ ;

- $b_k$ est un bruit additif, bruit supposé gaussien, blanc, circulaire et centré.

Parmi les techniques connues de l'art antérieur mises en oeuvre pour permettre l'estimation du déphasage parasite $\theta_k$, en vue de sa correction, les estimations les plus sophistiquées s'appuient sur des traitements numériques extrêmement lourds, méthodes de Monte-Carlo par chaîne de Markov ou autres, traitant simultanément des pans entiers de données d'observation reçues.

De telles techniques s'avèrent toutefois très difficiles voire impossibles à mettre en oeuvre en pratique, car elles nécessitent une trop grande puissance de calcul en temps réel.

On leur préfère, en raison de leur simplicité de mise en oeuvre, la technique des boucles à verrouillage de phase, désignées PLL pour Phase Locked Loop en anglais, qui traitent les données d'observation reçues de manière séquentielle, successivement.

De manière typique, une boucle à verrouillage de phase est un algorithme numérique itératif permettant d'estimer la valeur de la phase et donc du déphasage parasite. Les algorithmes et traitements numériques précités dépendent étroitement du type de modulation mis en oeuvre.

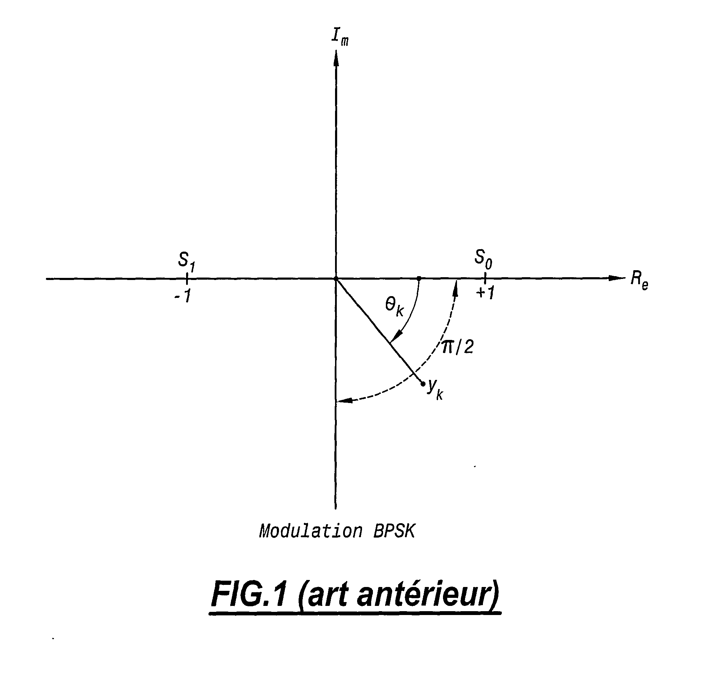

A titre d'exemple, dans le cas d'une modulation de phase à deux états, MDP2, encore désignée Binary Phase Shift Keying, BPSK, en anglais, les symboles transmis à l'émission sont égaux à -1 ou +1. En raison du déphasage parasité $\theta_k$ précédemment évoqué, introduit par le canal de transmission, les données d'observation obtenues en réception en sortie du démodulateur complexe, ne sont plus les valeurs -1 ou +1 correspondantes, mais ces valeurs déphasées, ainsi que représenté en figure 1.

Une boucle de verrouillage de phase classique permettant d'estimer la phase véritable et donc le déphasage parasite $\theta_k$ dans le cas d'une modulation BPSK est la boucle de COSTAS, permettant d'estimer la phase $\varphi_k$ d'une donnée d'observation courante $y_k$ à partir de la formule itérative

$$\varphi_k = \varphi_{k-1} + \gamma \, \text{Im}\!\left(y_k^2 e^{-i2\varphi_{k-1}}\right) \quad (2)$$

à partir de la donnée d'observation courante $y_k$ et de l'estimation précédente de la phase $\varphi_{k-1}$.

Pour d'autres types de modulation, notamment la modulation de deux porteuses en quadrature, désignée modulation QAM pour Quadrature Amplitude Modulation en anglais, d'autres relations sont utilisées.

De manière générale, quel que soit le type de modulation employé, les boucles à verrouillage de phase vérifient la relation :

$$\varphi_k = \varphi_{k-1} + \gamma \, F(y_k, \varphi_{k-1}) \quad (3).$$

Toutes les boucles à verrouillage de phase de ce type ont pour objet de calculer la phase courante $\varphi_k$ en fonction de l'estimation de phase précédente $\varphi_{k-1}$ par l'intermédiaire d'une fonction F dépendant étroitement du type de modulation M-QAM considéré.

En outre, le paramètre $\gamma$ peut être formé par une fonction de filtrage du second ordre, correcteur proportionnel et intégral, ou par une fonction de filtrage d'ordre supérieur.

Les boucles à verrouillage de phase précitées, reprenant le modèle analogique traditionnel, présentent une même limitation majeure due au fait que l'estimation de la phase $\varphi_k$ repose essentiellement sur la valeur estimée précédente $\varphi_{k-1}$, sur une fonction d'une ou plusieurs données d'observation passées et/ou de la donnée d'observation présente et d'une ou plusieurs estimations passées.

De ce fait, l'estimation courante de la phase, et la correction de celle-ci, restent largement sous-optimales.

La limitation à une estimation causale, laquelle ne dépend que des observations passées, n'est plus nécessaire lorsqu'un bloc de données d'observation est mémorisé, par exemple pour les besoins d'une correction d'erreur.

Dans cet ordre d'idées, la demande de brevet PCT WO 2004/036753 publiée le 29 avril 2004, décrit un procédé d'estimation de phase de données d'observation transmises par un canal de transmission à partir de symboles en modulation BPSK ou QAM, cette opération étant réalisée sur un bloc de données d'observation, grâce à l'exécution d'au moins une boucle à verrouillage de phase, sur une séquence prédéterminée de données d'observation extraites de ce bloc.

Le procédé décrit dans ce document permet effectivement de s'affranchir sensiblement de la limitation précitée à une estimation causale, car le traitement par bloc permet de tenir compte, pour l'évaluation courante de la phase $\varphi_k$, non seulement des données d'observation antérieures mais également postérieures au sein d'un même bloc.

Ainsi, dans un mode de mise en oeuvre du procédé précité, cette limitation est supprimée par mise en oeuvre d'un premier puis d'un deuxième processus itératif constitué par une boucle de phase classique, par lecture des données d'observation dans un sens direct puis inverse.

Cependant, le procédé précité présente l'inconvénient de n'exploiter les informations disponibles dans les récepteurs équipés notamment d'un turbo-décodeur, dans lequel des informations de fiabilité des données d'observation sont en outre disponibles, que dans le cas d'une modulation de type BPSK dans laquelle le symbole est égal soit à +1, soit à -1.

Ces informations sont disponibles sous forme d'informations souples, informations a priori sur chaque symbole, au niveau du turbo-décodeur.

Toutefois, dans cette situation, où le nombre d'états de la grille des symboles est limité à deux, la marge d'erreur de phase de chaque donnée d'observation vis-à-vis des états précités et des symboles correspondants est

voisine de $\pm\Pi/_2$. Les boucles de phase actuelles de l'état de la technique utilisées pour la détection de données d'observation transmises en modulation BPSK fonctionnent de manière correcte et l'introduction d'une correction supplémentaire à partir des informations souples précitées en modulation BPSK apparaît en définitive d'un intérêt réduit.

Le document intitulé « Turbo embedded estimation with imperfect phase/frequency recovery » de CIONI et Al. publié dans IEEE International Conference on Communication, New York, vol.1 du 5, 11 mai 2003 décrit un procédé d'estimation de phase et/ou de gain de données d'observations mémorisées correspondant à une succession de symboles numériques formés par une suite de bits en modulation

QAM. La présente invention a pour object de proposer un procédé, une boucle de gain-phase et un récepteur selon les revendications 1, 18 et 19.

En particulier, la présente invention a pour objet de proposer un procédé d'estimation de phase pour un récepteur numérique particulièrement adapté au traitement d'un signal numérique transmis en modulation QAM quelconque vers un récepteur doté d'un système de correction d'erreur souple, ou, plus généralement, dans tout récepteur utilisant une méthode itérative, dite méthode turbo, de telles méthodes étant classiquement utilisées pour le codage correcteur d'erreur (turbo codes), pour l'égalisation (turbo égalisation) ou pour la synchronisation (turbo synchronisation).

Un autre objet de la présente invention est également de proposer un procédé d'estimation du gain pour un récepteur numérique à contrôle automatique de gain particulièrement adapté au traitement d'un signal numérique transmis en modulation QAM quelconque vers un récepteur doté d'un système de correction d'erreur souple, ou plus généralement dans tout récepteur utilisant une méthode itérative, tel que cité en liaison avec le procédé d'estimation de phase, objet de la présente invention.

Un autre objet de la présente invention est également de proposer un procédé d'estimation conjointe de la phase et du gain pour un récepteur numérique particulièrement adapté au traitement d'un signal numérique transmis en modulation QAM quelconque vers un récepteur doté d'un système de correction d'erreur souple, ou plus généralement, dans tout récepteur utilisant une méthode itérative, tel que cité en liaison avec le procédé d'estimation de phase respectivement de gain, objets de la présente invention.

Un autre objet de la présente invention est également la mise en oeuvre du procédé d'estimation de phase, du procédé d'estimation de gain respectivement du procédé d'estimation conjointe de phase et du gain, objets de la présente invention, dans des récepteurs monoporteuse et/ou multiporteuses.

Un autre objet de la présente invention est enfin la mise en oeuvre d'une structure spécifique de boucle à verrouillage de phase, permettant d'accroître la précision de l'estimation de la phase, du gain respectivement de l'estimation conjointe de la phase et du gain dans un récepteur numérique doté d'un système de correction d'erreur souple, ou, plus généralement, dans tout récepteur utilisant une méthode itérative équivalente.

Le procédé d'estimation des paramètres de phase et/ou de gain de données d'observation mémorisées, correspondant à une succession de symboles numériques formés par une suite de bits en modulation QAM transmis par un canal de transmission, objet de la présente invention, est remarquable en ce qu'il consiste au moins à effectuer une estimation itérative de ces paramètres de phase et/ou de gain à partir d'une séquence de données d'observation, cette estimation itérative étant effectuée à partir d'une loi de phase et/ou de gain spécifique reliant la phase et/ou le gain estimé des données d'observation successives de cette séquence, initialiser au moins un processus adaptatif d'estimation desdits paramètres de phase et/ou de gain, à partir de l'une au moins des valeurs de phase et/ou de gain successives estimées de ces données d'observation, et exécuter ce processus adaptatif d'estimation, comportant au moins une fonction d'estimation de ces paramètres de phase et/ou de gain dépendant de la valeur de la probabilité de vraisemblance, exprimée en termes de log-vraisemblance, de chaque données d'observation vis-à-vis de l'ensemble des bits constitutifs de ces symboles.

Le procédé objet de l'invention trouve application à la mise en oeuvre de récepteurs de signaux numériques possédant une structure de décodage de type « turbo », en particulier de récepteurs de signaux numériques à fort débit transmis en modulation QAM à grand nombre d'états.

Il sera mieux compris à la lecture de la description et à l'observation des dessins ci-après, dans lesquels, outre la figure 1 relative à l'art antérieur :

- la figure 2a représente, à titre illustratif, un organigramme des étapes essentielles de mise en oeuvre du procédé objet de la présente invention ;
- la figure 2b représente, à titre illustratif, un détail de mise en oeuvre de l'étape d'initialisation puis d'exécution du processus adaptatif exécuté par le procédé objet de l'invention, tel qu'illustré en figure 2a ;
- la figure 3a représente, à titre illustratif, un organigramme des étapes essentielles de mise en oeuvre du procédé objet de la présente invention dans un premier exemple relatif à l'estimation de phase ;
- la figure 3b représente, à titre illustratif, un organigramme des étapes essentielles de mise en oeuvre du procédé objet de la présente invention dans un deuxième exemple relatif à l'estimation de gain ;
- la figure 3c représente, à titre illustratif, un chronogramme de lecture des données d'observation dans un sens direct respectivement inverse, pour l'exécution de la mise en oeuvre du procédé objet de l'invention tel que représenté en figure 3a ou 3b;

- la figure 4a représente, à titre illustratif, un organigramme des étapes essentielles de mise en oeuvre du procédé objet de l'invention dans un troisième exemple préférentiel non limitatif relatif à l'estimation conjointe du gain et de la phase ;
- la figure 4b représente une boucle de gain phase conforme à l'objet de la présente invention ;
- la figure 5a représente, sous forme de blocs fonctionnels, un schéma illustratif d'un récepteur à turbodécodage équipé d'une boucle de gain-phase conforme à l'objet de la présente invention et mettant en oeuvre le procédé objet de l'invention représenté en figure 4a ;
- la figure 5b représente, sous forme de blocs fonctionnels, un récepteur à turbo décodage permettant d'effectuer une levée d'ambiguïté de phase.

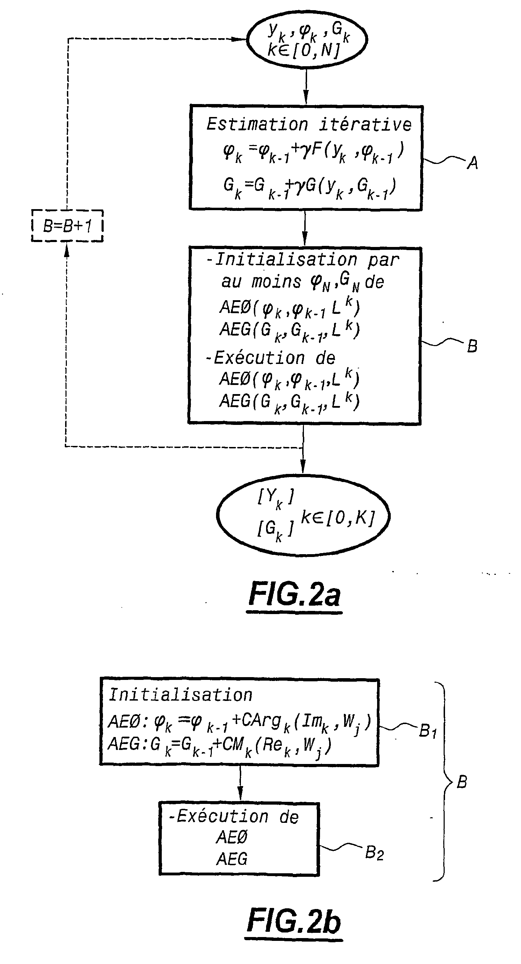

Une description plus détaillée de la mise en oeuvre du procédé, objet de la présente invention, sera maintenant donnée en liaison avec les figures 2a et 2b.

D'une manière générale, on indique que le procédé d'estimation de paramètres de phase et/ou de gain de données d'observation mémorisées, objet de la présente invention, s'applique à des données correspondant à une succession de symboles numériques formée par une suite de bits en modulation QAM transmis par un canal de transmission quelconque.

Par « données d'observation mémorisées », on entend toute suite de données d'observation $y_k$ mémorisée sur un support quelconque.

En particulier, et dans un exemple de mise en oeuvre particulièrement avantageux du procédé objet de l'invention, celui-ci peut être mis en oeuvre pour des données d'observation mémorisées par blocs et, en particulier, des données d'observation traitées par un récepteur muni de ressources de turbodécodage, ainsi qu'il sera décrit ultérieurement dans la description.

D'une manière générale, en référence à la figure 2a, on indique que le procédé objet de l'invention consiste, en une étape A, à effectuer une estimation itérative des paramètres de phase et/ou de gain à partir d'une séquence de données d'observation choisies parmi les données d'observation mémorisées.

L'estimation itérative précitée est effectuée à partir d'une loi de phase et/ou de gain spécifique reliant la phase estimée des données d'observation successives de la séquence choisie.

Suite à l'étape A d'estimation itérative, on dispose, bien entendu, d'une pluralité de valeurs de phase et/ou de gain estimées issues de l'étape A.

L'étape A est alors suivie d'une étape B consistant à initialiser au moins un processus adaptatif d'estimation des paramètres de phase et/ou de gain à partir de l'une au moins des valeurs de phase et/ou de gain successives estimées des données d'observation obtenues à l'étape A.

Suite à l'initialisation précitée, on procède alors à l'exécution du processus adaptatif d'estimation, ce dernier, conformément à un aspect particulièrement remarquable du procédé objet de la présente invention, comportant au moins une fonction d'estimation des paramètres de phase et/ou de gain dépendant de la valeur de la probabilité de vraisemblance, exprimée en termes de log-vraisemblance, de chaque donnée d'observation vis-à-vis de l'ensemble des bits constitutifs des symboles de la modulation considérée.

D'une manière générale, et dans le cadre de la mise en oeuvre du procédé objet de la présente invention, tel que représenté en figure 2a, et dans tous les exemples de mise en oeuvre successifs représentés aux dessins et décrits ci-après dans la description, on indique :

- un processus est dit itératif lorsque ce processus permet d'évaluer, notamment d'estimer, la valeur d'un paramètre pour une variable courante vis-à-vis de la valeur de ce même paramètre pour la même variable estimée à un ou plusieurs instants précédents ;
- au contraire, un processus est dit adaptatif lorsque ce processus est un processus d'évaluation, notamment d'estimation, d'un paramètre d'une variable courante compte tenu d'une estimation ou évaluation d'évolution de la valeur de ce paramètre en fonction d'une loi physique externe, par exemple.

Dans le cadre de la mise en oeuvre du procédé objet de la présente invention, on indique que l'estimation itérative mise en oeuvre à l'étape A fait appel à la connaissance de la valeur mémorisée du paramètre de phase respectivement de gain pour au moins la donnée d'observation précédente pour obtenir la valeur du paramètre de phase respectivement de gain correspondante pour la donnée d'observation courante $y_k$ de rang k.

Au contraire, le processus adaptatif mis en oeuvre à l'étape B fait appel non seulement à la notion de caractère itératif de la valeur du paramètre de phase respectivement de gain, mais à une variable externe, la variable externe correspondant alors à une estimation des paramètres de phase et/ou de gain dépendant de la valeur de la probabilité de vraisemblance obtenue de manière externe. Cette valeur de vraisemblance obtenue de manière externe peut être délivrée par un turbo-décodeur, par exemple, ainsi qu'il sera décrit ultérieurement dans la description.

En ce qui concerne la mise en oeuvre de l'étape A sur la figure 2a, on indique que la loi de phase et/ou de gain spécifique vérifie la relation :

$$(4) \quad \varphi_k = \varphi_{k-1} + \gamma \, F(y_k, \varphi_{k-1}) \, ; G_k = G_{k-1} + \gamma G(y_k, G_{k-1}).$$

Dans la relation précédente :

$\varphi_k$, $\varphi_{k-1}$ désignent la valeur de la phase estimée de la donnée d'observation $y_k$ respectivement $y_{k-1}$ de rang respectif k et k-1 ;
$G_k$ et $G_{k-1}$ désignent la valeur de gain estimée de la donnée d'observation $y_k$ respectivement $y_{k-1}$ de rang respectif k et k-1 ;
F et G désignent respectivement une fonction spécifique dépendant du type de modulation QAM utilisé ;
$\gamma$ désigne une fonction de filtrage prédéterminée.

Au contraire, à l'étape B de la figure 2a, on désigne par :

$$A E \Phi \, (\varphi_k, \varphi_{k-1}, L^k)$$

$$AEG \, (G_k, G_{k-1}, L^k),$$

le processus adaptatif d'estimation des paramètres de phase et/ou de gain comportant au moins une fonction d'estimation des paramètres de phase et/ou de gain dépendant de la valeur de la probabilité de vraisemblance, exprimée en termes de log-vraisemblance $L^k$, de chaque donnée d'observation vis-à-vis de l'ensemble des bits constitutifs des symboles de la modulation QAM considérée.

En référence à la même figure 2a, on indique que l'exécution de l'étape B est réalisée pour un bloc courant de données, par exemple B. A la fin de l'exécution de l'étape B, le procédé d'estimation de paramètres de phase et/ou de gain de données d'observation objet de l'invention consiste, bien entendu, en une mise en oeuvre pour le bloc suivant de données, cette opération étant notée sur la figure 2a par la flèche de retour matérialisée en pointillés et le passage au bloc suivant par la relation B = B+1.

Suite à la mise en oeuvre du procédé objet de l'invention tel que représenté en figure 2a, on dispose, bien entendu, des paramètres de phase estimée pour chaque donnée d'observation $y_k$ de rang k, les paramètres de phase étant notés $\hat{\varphi}_k$ et des paramètres de gain estimée notés $\hat{G}_k$ pour k appartenant à [0,K]. Les blocs sont, bien entendu, réputés comporter K+1 données d'observation.

D'une manière plus spécifique, on indique que le processus adaptatif mis en oeuvre à l'étape B comporte, de préférence, une fonction itérative d'estimation de la phase respectivement du gain estimé de chaque donnée d'observation $y_k$ de rang k vis-à-vis de tous les symboles de la modulation QAM considérée, compte tenu de la probabilité de vraisemblance, exprimée en termes de log-vraisemblance de chaque donnée d'observation $y_k$ vis-à-vis de l'ensemble des bits constitutifs des symboles.

Ainsi, en référence à la figure 2b, l'étape d'initialisation consiste à initialiser le processus adaptatif et la fonction itérative d'estimation de la phase respectivement du gain vérifiant la relation :

$$A E \Phi : \varphi_k = \varphi_{k-1} + CArg_k(Im_k, W_j)$$

$$AEG : G_k = G_{k-1} + CM_k(Re_k, W_j).$$

L'étape B2 de la figure 2b consiste ensuite à exécuter, bien entendu, le processus adaptatif et, en particulier, la fonction itérative d'estimation de la phase respectivement du gain considérée de chaque donnée d'observation $y_k$ de rang k vis-à-vis de tous les symboles de la modulation QAM considérée.

D'une manière générale, en référence à la figure 2b, on indique que la fonction itérative d'estimation de la phase et permettant de définir le processus adaptatif considéré vérifie la relation AEΦ précédemment citée. Elle comprend :

- un terme d'argument de phase estimée constitué par la phase estimée $\varphi_{k-1}$ de la donnée d'observation précédente $y_{k-1}$ de rang k-1 ;
- un terme correctif d'argument de phase noté $CArg_k(Im_k, W_j)$, ce terme correctif d'argument de phase, conformément à un aspect remarquable du procédé objet de l'invention, étant proportionnel à la valeur de l'argument de phase mesurée de la donnée d'observation courante $y_k$, pondérée par le poids ou valeur de confiance, exprimée en termes de vraisemblance de cette donnée d'observation courante vis-à-vis de l'ensemble des symboles de la modulation QAM considérée.

La valeur du terme correctif d'argument de phase $CArg_k(Im_k, W_j)$ de la donnée d'observation est prise égale à la partie imaginaire du nombre complexe, produit de la donnée d'observation courante $y_k$ de rang k et du symbole conjugué $\overline{Q}_j$ du symbole $Q_j$ corrigé par l'argument de phase $\varphi_{k-1}$ estimée pour la donnée d'observation précédente $y_{k-1}$.

Compte tenu des considérations précédentes et de la valeur spécifique du terme correctif d'argument de phase précédemment décrit, la fonction itérative d'estimation de la phase de chaque donnée d'observation vérifie la relation :

$$(5) \qquad \varphi_k = \varphi_{k-1} + \gamma \frac{\displaystyle\sum_{j=1}^{M} Im(y_k \overline{Q}_j e^{-i\varphi k-1}) W_j(y_k, L^k, \varphi_{k-1})}{\displaystyle\sum_{j=1}^{M} W_j(y_k, L^k, \varphi_{k-1})}$$

Dans la relation précédente :

$\gamma$ désigne la fonction de filtrage prédéterminée précédemment définie dans la description ;
$Im(y_k \overline{Q}_j e^{-i\varphi k-1})$ désigne la partie imaginaire du nombre complexe produit de la donnée d'observation $y_k$ de rang k et du symbole conjugué $\overline{Q}_j$ du symbole $Q_j$ corrigé par l'argument de phase $\varphi_{k-1}$ estimée à l'itération précédente, c'est-à-dire la donnée d'observation précédente $y_{k-1}$ ;
$W_j(y_k, L^k, \varphi_{k-1})$ désigne le poids ou valeur de confiance, exprimée en termes de vraisemblance, attribuée au symbole $Q_j$ vis-à-vis de la donnée d'observation $y_k$ courante.

En ce qui concerne le processus adaptatif d'estimation de gain, on indique que la fonction itérative AEG comprend :

- un terme de gain estimé $G_{k-1}$ de la donnée d'observation précédente $y_{k-1}$ ;
- un terme correctif d'élément de gain $CM_k(Re_k, W_j)$ proportionnel à la valeur d'écart de gain relatif de la donnée d'observation courante $y_k$ de rang k et du gain estimé $G_{k-1}$ de la donnée d'observation précédente, vis-à-vis d'un symbole donné $Q_j$ de rang j, cette valeur d'écart étant pondérée par le poids ou valeur de confiance, exprimée en termes de vraisemblance, attribuée au symbole $Q_j$ vis-à-vis de l'ensemble des symboles ;
- la valeur de l'écart de gain relatif de la donnée d'observation courante $y_k$ de rang k et du gain estimé $G_{k-1}$ de la donnée d'observation précédente vis-à-vis d'un symbole donné $Q_j$ de rang j est prise égale à la différence entre la partie réelle du produit scalaire de la donnée d'observation courante $y_k$ et du symbole conjugué $\overline{Q}_j$ du symbole $Q_j$ de rang j et le produit du gain $G_{k-1}$ de la donnée d'observation précédente et du carré du module du symbole $Q_j$ de rang j. D'une manière plus spécifique, on indique que cette valeur d'écart de gain représente une correction de gain pour la donnée d'observation courante vis-à-vis du gain estimé pour la donnée d'observation précédente $y_{k-1}$ de rang k-1 ;

Compte tenu des remarques de définition fonctionnelle du terme correctif de gain précité, la fonction itérative AEG vérifie la relation :

$$(6) \quad G_k = G_{k-1} + \gamma \frac{\sum_{j=1}^{M}(\mathrm{Re}(y_k\overline{Q_j}) - G_{k-1}|Q_j|^2)W_j(y_k, L^k, G_{k-1})}{\sum_{j=1}^{M}W_j(y_k, L^k, G_{k-1})}$$

Dans la relation précédente, on indique que :

$\gamma$ désigne la fonction de filtrage prédéterminée ;

$\mathrm{Re}(y_k\overline{Q_j})$ désigne la partie réelle du nombre complexe produit de la donnée d'observation $y_k$ de rang k et du symbole conjugué $\overline{Q_j}$ du symbole $Q_j$ ;

$W_j(y_k, L^k, G_{k-1})$ désigne le poids ou valeur de confiance, exprimée en termes de vraisemblance, attribuée au symbole $Q_j$ vis-à-vis de la donnée d'observation courante $y_k$.

Bien entendu, le terme de poids ou valeur de confiance exprimée en termes de vraisemblance attribuée au symbole $Q_j$ vis-à-vis de la donnée d'observation $y_k$ dépend naturellement de la phase estimée lorsque la fonction itérative est mise en oeuvre pour l'estimation de la phase, et, au contraire, du gain estimé lorsque la fonction itérative des processus adaptatifs est mise en oeuvre lorsque le gain est estimé.

Pour une estimation de la phase, le poids ou valeur de confiance exprimée en termes de vraisemblance attribuée au symbole $Q_j$ vis-à-vis de la donnée d'observation courante $y_k$ vérifie la relation :

$$(7) \quad Wj(y_n, L^n, \theta) = \exp\left(\frac{1}{2}\sum_{m=1}^{N}q_m^j L_m^n - \frac{|y_n - e^{+i\theta}Q_j|^2}{\sigma_b^2}\right)$$

Dans la relation précédente :

exp désigne la fonction exponentielle ;

$q_m^j$ désigne le $m^{em}$ bit du symbole $Q_j$ considéré de la modulation QAM utilisée ;

$L_m^n$ désigne la valeur de log-vraisemblance de la donnée d'observation courante sur le $m^{em}$ bit du $n^{em}$ symbole QAM pour une modulation à N+1 symbole ;

$L^n$ désigne la liste des valeurs de log-vraisemblance sur tous les bits, avec $L^n = (L_1^n, \ldots L_N^n)$ ;

$\sigma_b^2$ désigne la puissance du bruit pour le canal de transmission considéré ;

$\theta$ désigne l'argument de phase estimé pour la donnée d'observation considérée.

De même, dans le cas d'une estimation du gain, le poids ou valeur de confiance exprimée en termes de vraisemblance attribuée au symbole $Q_j$ vis-à-vis de la donnée d'observation considérée vérifie la relation :

$$(8) \quad W_j(y_n, L^n, G) = \exp\left(\frac{1}{2}\sum_{m=1}^{N}q_m^j L_m^n - \frac{|y_n - GQ_j|^2}{\sigma_b^2}\right)$$

Dans la relation précédente, les mêmes paramètres désignent les mêmes paramètres que dans la relation (7), excepté le paramètre G, lequel désigne la valeur de gain estimée pour la donnée d'observation $y_n$ considérée.

En outre la valeur du poids ou valeur de confiance précitée introduite par les relations (7) et (8) précédentes n'est pas limitative. En effet, la valeur du poids ou valeur de confiance exprimée en termes de vraisemblance attribuée au symbole Qj vis-à-vis de $y_k$ peut correspondre, avantageusement, à une valeur globale pour chaque symbole délivrée par symbole par le démappeur souple ou le turbo-décodeur.

Dans cette variante, le poids ou valeur de confiance exprimée en termes de vraisemblance attribué au symbole Qj vis-à-vis de $y_k$ vérifie la relation pour la phase :

$$\text{(7bis)} \quad W_j(y_n, L^n, \theta) = \exp\left( L_{n,j} - \frac{\left| y_n - e^{+i\theta} Q_j \right|^2}{\sigma_b^2} \right)$$

pour le gain :

$$\text{(8 bis)} \quad W_j(y_n, L^n, G) = \exp\left( L_{n,j} - \frac{\left| y_n - G Q_j \right|^2}{\sigma_b^2} \right)$$

Dans les relations précédentes $L_{n,j}$ désigne le rapport de vraisemblance $\ln \dfrac{P(a_j)}{P(ref)}$ délivré par le démappeur souple ou par le turbo-décodeur par symbole, ln désignant le log Népérien, $P(a_j)$ désignant la probabilité du symbole complexe $a_j$ et P(ref) la probabilité d'une valeur de référence.

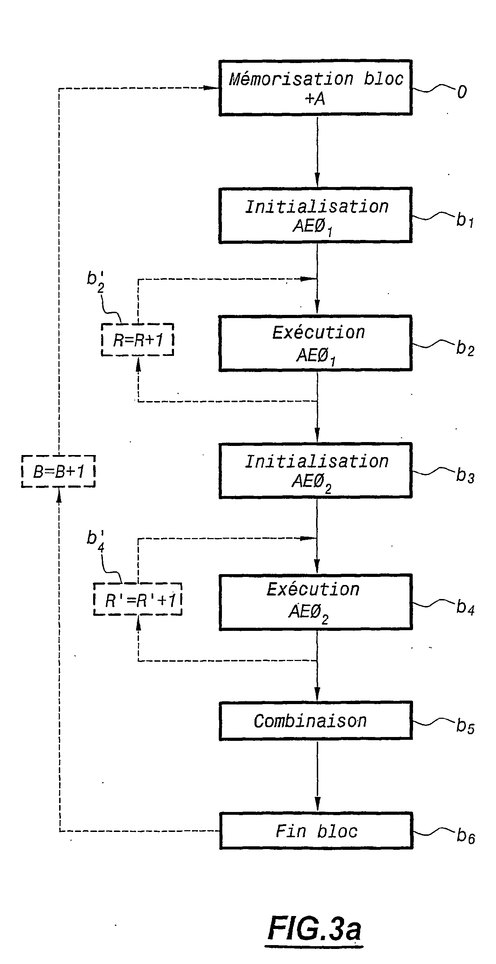

Différents modes de mise en oeuvre du procédé d'estimation de phase et/ou de gain objet de la présente invention seront maintenant décrits à titre d'exemples en liaison avec la figure 3a et les figures suivantes.

La figure 3a concerne un premier exemple non limitatif dans lequel le procédé objet de l'invention permet d'effectuer une estimation du seul paramètre de phase convenant pour tout type de modulation QAM en particulier.

En référence à la figure 3a précitée, le procédé consiste tout d'abord à effectuer une mémorisation par blocs des données d'observation $y_k$ et à exécuter l'étape A représentée en figure 2a. On rappelle que cette étape consiste à effectuer l'estimation itérative des paramètres de phase à partir d'une loi de phase spécifique reliant la phase estimée des données d'observation successives de la séquence. On rappelle que cette étape de mémorisation peut consister à stocker K+1 observations $y_0$ à $y_K$ à partir du signal de sortie délivré par le démodulateur complexe ou en sortie d'un autre élément constitutif d'un récepteur muni d'un module de turbo-décodage. Dans les applications précédemment citées dans la description, le procédé objet de l'invention peut avantageusement être mis en oeuvre sur des blocs de 200 à 2000 données d'observation, le nombre de données d'observation constitutives de chaque bloc étant choisi en fonction de l'application et du type de modulation QAM utilisé pour la transmission des données d'observation.

La mémorisation précitée ayant été effectuée, on procède alors à l'exécution de l'étape A de la figure 2a sur une séquence prédéterminée de données d'observation mémorisées dans le bloc de données d'observation considéré. En particulier, il est possible de construire toute séquence *a priori* et, par exemple, une séquence chronologique de données d'observation $y_k$ suivant, par exemple, l'ordre de réception des données. La fonction utilisée pour la mise en oeuvre de l'estimation itérative précitée peut être celle décrite précédemment dans la description pour la mise en oeuvre de l'étape A de la figure 2a.

En référence à la figure 3a, l'étape o est alors suivie d'une étape $b_1$ consistant à initialiser un premier processus adaptatif, noté $AE\Phi_1$ de façon à fixer les premières valeurs du premier processus itératif adaptatif précité à partir d'une valeur telle que la valeur de phase dernièrement estimée.

L'étape d'initialisation $b_1$ est alors suivie d'une étape $b_2$ consistant à exécuter le premier processus adaptatif $AE\Phi_1$, ce processus adaptatif comportant au moins une fonction d'estimation des paramètres de phase dépendant de la valeur de la probabilité de vraisemblance, exprimée en termes de log-vraisemblable de chaque donnée d'observation, vis-à-vis de l'ensemble des bits constitutifs des symboles de la constellation de modulation QAM utilisée.

On comprend ainsi que la valeur de la probabilité de vraisemblance, ou information souple, constitue une variable externe permettant de rendre le processus adaptatif conformément à la définition préalablement donnée dans la description. Le premier processus adaptatif précité permet ainsi d'engendrer par lecture des données d'observation $y_k$ de rang k, par exemple dans un sens direct, une première suite de valeurs intermédiaires successives de déphasage

estimées $\varphi_0$ à $\varphi_N$.

L'initialisation réalisée à l'étape $b_1$ permet de fixer les premières valeurs du premier processus adaptatif. De préférence, lorsque le paramètre à estimer présente une continuité d'un bloc de données d'observation à l'autre, en particulier dans le cas de la phase, on initialise d'une manière avantageuse le premier processus adaptatif en prenant en considération la dernière valeur estimée au bloc précédent, par exemple. On comprend, en particulier, que, pour les canaux de transmission courants, le paramètre de phase est un paramètre lentement variable en raison de la stabilité de la transmission pendant la durée correspondant à la transmission d'un bloc de données d'observation.

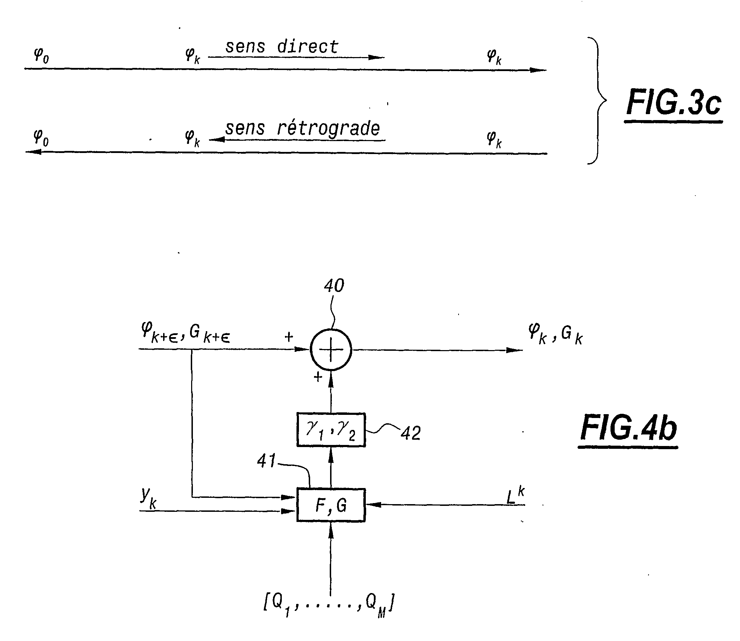

L'exécution du premier processus adaptatif précité à l'étape $b_2$ permet de construire la séquence des valeurs de phase estimées $\varphi_0...\varphi_k,...\varphi_K$, ainsi que représenté en figure 3c par la flèche supérieure allant de gauche à droite.

Suite à l'étape $b_2$, le procédé objet de l'invention consiste à exécuter une étape $b_3$ consistant à initialiser un deuxième processus adaptatif $AE\Phi_2$ de façon à fixer les premières valeurs de ce dernier à partir de la dernière valeur intermédiaire de déphasage estimée obtenue suite à l'exécution du premier processus adaptatif $AE\Phi_1$.

De préférence, on initialise la première valeur du second processus adaptatif $AE\Phi_2$, à savoir $\varphi'_K$ avec la dernière valeur numérique $\varphi_K$ calculée par le premier processus adaptatif $AE\Phi_1$. Cette opération est représentée en figure 3c par la flèche inférieure allant de droite à gauche.

L'étape $b_3$ est alors suivie de l'étape $b_4$ consistant à exécuter le deuxième processus adaptatif, lequel comporte, bien entendu, une fonction d'estimation des paramètres de phase dépendant de la valeur de probabilité de vraisemblance, exprimée en termes de log-vraisemblance de chaque donnée d'observation vis-à-vis de l'ensemble des bits constitutifs des symboles. Le deuxième processus adaptatif $AE\Phi_2$ permet d'engendrer, par lecture des données d'observation $y_k$ dans le sens inverse, une deuxième suite de valeurs intermédiaires successives de déphasage estimée $\varphi'_{K-1}$ à $\varphi'_0$.

Le procédé objet de l'invention consiste ensuite en une étape $b_5$ à calculer la valeur finale du déphasage estimé $\varphi''_k$ pour toute donnée d'observation $y_k$ de rang k comme une combinaison de la première et de la deuxième valeur intermédiaire de déphasage de même rang k selon la relation :

$$(9) \quad \varphi''_k = g(\varphi_k, \varphi'_k).$$

D'une manière générale, on indique que la relation de combinaison de la première et de la deuxième suite de valeurs intermédiaires successives de déphasage est une fonction choisie en fonction du type de modulation QAM considéré.

Dans un mode de réalisation particulier, on choisit g de façon à exprimer la valeur finale de déphasage estimé sous la forme d'une combinaison linéaire de la première et de la deuxième suite de valeurs intermédiaires successives de déphasage estimé, par exemple.

Un choix particulier peut consister à choisir des coefficients de combinaison linéaire $A_k = B_k = \frac{1}{2}$, la combinaison linéaire étant alors de la forme

$$(10) \quad \varphi''_k = A_k\varphi_k + B_k\varphi'_k.$$

En outre, les coefficients de la combinaison linéaire $A_k$ et $B_k$ peuvent être des coefficients variables de façon à privilégier l'un des deux processus adaptatifs en fonction du rang k des données d'observation. Il est ainsi possible de choisir les poids de la combinaison linéaire de manière à privilégier le premier processus adaptatif $AE\Phi_1$ dans la partie droite du bloc représenté en figure 3c, et, inversement, d'ajouter plus de poids au second processus adaptatif dans la partie la plus à gauche du bloc considéré. Ce mode opératoire permet de privilégier toujours le processus adaptatif qui a effectué le plus d'itérations et permet de prétendre à une plus grande précision du calcul de la phase.

En ce qui concerne la mise en oeuvre du premier et du deuxième processus adaptatif $AE\Phi_1$ respectivement $AE\Phi_2$, on indique que ces derniers peuvent être, de manière particulièrement avantageuse, mis en oeuvre par l'intermédiaire d'une première respectivement d'une deuxième boucle de phase vérifiant la relation 11 :

$$(11) \quad \varphi_k = \varphi_{k+\varepsilon} + \gamma \frac{\sum_{j=1}^{M} \mathrm{Im}(y_k \overline{Q}_j e^{-i\varphi_{k+\varepsilon}}) W_j(y_k, L^k, \varphi_{k+\varepsilon})}{\sum_{j=1}^{M} W_j(y_k, L^k, \varphi_{k+\varepsilon})}.$$

En particulier, en référence à la relation précitée, on indique que le premier processus adaptatif est mis en oeuvre pour ε = -1 et le deuxième processus adaptatif est mis en oeuvre pour ε = +1 dans la relation précitée.

Pour la mise en oeuvre de la première et de la deuxième boucle de phase précitées, exécutant successivement le premier respectivement le deuxième processus adaptatif, l'expression du poids ou valeur de confiance exprimée en termes de log-vraisemblance attribuée au symbole $Q_j$ vis-à-vis de la donnée d'observation considérée $y_k$ vérifie la relation 7 précédemment donnée dans la description.

Le procédé d'estimation de phase objet de la présente invention dans son mode de mise en oeuvre tel que représenté en figure 3a convient pour tout type de modulation de type QAM et exploite les informations *a priori*, informations souples, sur les symboles pouvant être fournis, par exemple, par un turbo-décodeur.

Il est à noter en pratique que le paramètre γ intervenant dans l'expression de la fonction adaptative représentant la boucle de phase peut être constitué par une fonction de filtrage numérique appliquée à l'argument de phase respectivement l'élément de gain pour former le terme correctif d'argument de phase ou de gain en fonction du modèle de déphasage que l'on souhaite corriger. Pour des déphasages simples, il est possible de s'accommoder d'un correcteur proportionnel simple alors que, dans des cas plus complexes, il est possible d'utiliser avantageusement un correcteur intégral, voire un filtre d'ordre supérieur. De préférence, la fonction de filtrage γ peut être réalisée au moyen d'un filtre numérique d'ordre 2 vérifiant la relation 12 :

$$(12) \quad \gamma[z] = \gamma_1 + \frac{\gamma_2}{1 - z^{-1}}.$$

Dans la relation précédente z désigne la transformée en Z.

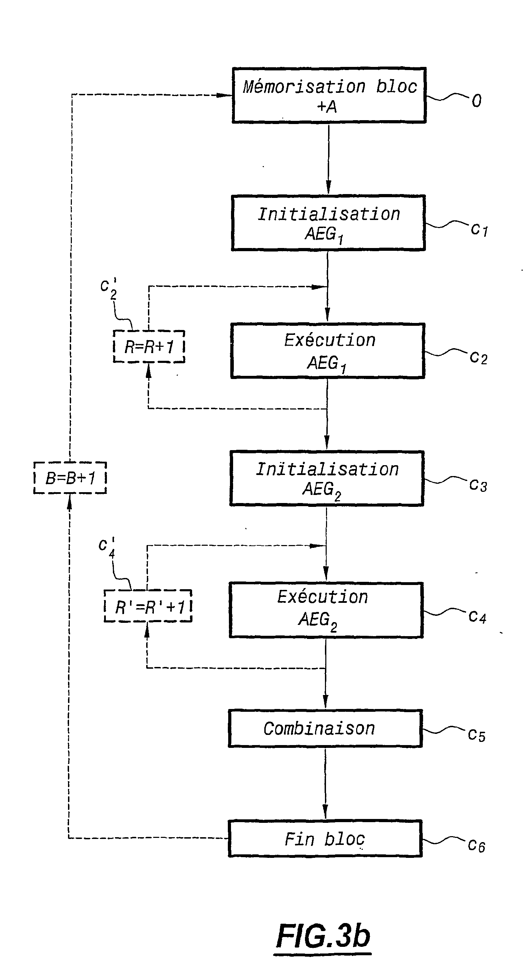

Un deuxième exemple de mise en oeuvre du procédé objet de l'invention pour une estimation du gain seul d'un récepteur recevant des données d'observation $y_k$, ce récepteur étant par exemple muni d'une boucle de contrôle automatique de gain, sera maintenant donné en liaison avec la figure 3b.

En règle générale, pour une modulation de type QAM, il faut également estimer le gain du canal afin de procéder à un démapage correct du symbole QAM au niveau du récepteur.

Dans cette situation, on suppose que la donnée d'observation reçue $y_k$ est liée au symbole $a_k$ par la relation 13 ci-après :

$$(13) \quad y_k = Ga_k + b_{k,} \ k \in [0,K].$$

Dans la relation précédente, $a_k$ désigne les symboles de la constellation QAM utilisée et G désigne un gain, le plus souvent une atténuation, apporté par le canal de transmission.

De même que dans le cas de l'estimation de la seule phase du mode de réalisation décrit en relation avec la figure 3a, le mode de réalisation relatif à l'estimation du seul gain consiste à mettre en oeuvre l'étape o de mémorisation de blocs de données d'observation $y_k$ et de l'étape A de la figure 2a.

Dans le cas de la mise en oeuvre de l'étape A de la figure 2a, on fait, bien entendu, appel à la fonction itérative de la loi de gain spécifique reliant le gain estimé des données d'observation successives de la séquence de données d'observation précitées.

Suite à l'étape o, le procédé objet de l'invention pour l'estimation du seul paramètre de gain consiste alors à appeler une étape $c_1$ consistant à initialiser un premier processus adaptatif de façon à fixer les premières valeurs du premier processus adaptatif telle que la valeur de gain dernièrement estimée. Le premier processus adaptatif est noté $AEG_1$ sur la figure 3b. L'initialisation précitée peut être effectuée dans des conditions analogues à celles réalisées pour la mise en oeuvre du procédé d'estimation de la seule phase, en particulier en ce qui concerne l'emploi d'un filtrage numérique pour le calcul du facteur γ en fonction de modèles d'évolution temporelle d'amplitude des données d'observation $y_k$ que l'on souhaite corriger. De la même façon que dans le cas de l'estimation de la seule phase, pour des modèles simples on peut utiliser un correcteur proportionnel simple alors que, dans des cas plus complexes, on peut avantageusement recourir à un correcteur intégral ou à un filtre d'ordre supérieur. L'initialisation du processus adaptatif d'estimation de gain consiste à donner la première valeur de gain $G_0$ et le filtre γ peut être réalisé au moyen d'un filtre numérique d'ordre 2, ainsi que décrit précédemment dans l'exemple de mise en oeuvre du procédé objet de l'invention pour l'estimation de la seule phase.

L'étape $c_1$ précitée est alors suivie d'une étape $c_2$ consistant à exécuter le premier processus adaptatif $AEG_1$, lequel comporte, bien entendu, au moins une fonction d'estimation des paramètres de gain dépendant de la valeur de probabilité de vraisemblance, exprimée en termes de log-vraisemblance de chaque donnée d'observation vis-à-vis de l'ensemble des bits constitutifs des symboles de la constellation de modulation QAM considéré. L'exécution du premier

processus adaptatif $AEG_1$ permet d'engendrer, par lecture des données d'observation $y_k$ de rang k, dans un sens direct par exemple, ainsi que représenté en liaison avec la figure 3c, une première suite de valeurs intermédiaires successives de gain notée $G_0$ à $G_K$.

De manière analogue au premier exemple de réalisation d'estimation de la seule phase, le procédé objet de l'invention pour l'estimation du seul gain consiste ensuite, en une étape $c_3$, à initialiser un deuxième processus adaptatif noté $AEG_2$ de façon à fixer les premières valeurs du deuxième processus adaptatif à partir de la dernière valeur de gain estimée $G_K$ obtenue suite à l'exécution du premier processus adaptatif.

L'étape d'initialisation précitée est alors suivie d'une étape $c_4$ consistant à exécuter le deuxième processus adaptatif $AEG_2$, lequel comporte, bien entendu, au moins une fonction d'estimation des paramètres de gain, dépendant de la valeur de la probabilité de vraisemblable, exprimée en termes de log-vraisemblance de chaque donnée d'observation vis-à-vis de l'ensemble des bits constitutifs des symboles de la modulation QAM considérée.

L'exécution du deuxième processus adaptatif AEG2 permet d'engendrer, par lecture des données d'observation $y_k$ de rang k dans le sens inverse ou rétrograde, une deuxième suite de valeurs intermédiaires successives de gain notée $G'_{K-1}$ à $G'_0$.

De manière semblable à l'exemple de mise en oeuvre du procédé objet de l'invention pour l'estimation de la seule phase, une étape c5 est alors appelée pour calculer la valeur finale du gain estimé G"k pour toute donnée d'observation $y_k$ de rang k, cette valeur finale de gain étant exprimée comme une combinaison de la première et de la deuxième valeur intermédiaire de gain de même rang k selon la relation 14 :

$$(14) \quad G''_k = g(G_k, G'_k).$$

Bien entendu, l'étape $c_6$ permet d'effectuer un traitement de fin de blocs et le traitement peut être répété pour chaque bloc par le retour B = B+1 de la même manière que dans le cas de la figure 3a.

De manière semblable au procédé d'estimation de la seule phase, le procédé objet de l'invention dans l'exemple de l'estimation du seul gain est avantageusement mis en oeuvre, pour l'exécution du premier et du deuxième processus adaptatif $AEG_1$, $AEG_2$, par l'intermédiaire d'une première respectivement d'une deuxième boucle de gain vérifiant la relation 15 :

$$(15) \quad G_k = G_{k+\varepsilon} + \gamma \frac{\sum_{j=1}^{M}(\text{Re}(y_k \overline{Q_j}) - G_{k+\varepsilon}|Q_j|^2)W_j(y_k, L^k, G_{k+\varepsilon})}{\sum_{j=1}^{M}W_j(y_k, L^k, G_{k+\varepsilon})}.$$

Dans la relation précédente, $\varepsilon$ prend la valeur -1 pour la mise en oeuvre du premier processus adaptatif $AEG_1$ et $\varepsilon$ = +1 pour la mise en oeuvre du deuxième processus adaptatif $AEG_2$.

En référence au premier et au deuxième exemple de mise en oeuvre non limitatifs du procédé d'estimation de phase respectivement de gain objet de la présente invention, on indique que la symétrie parfaite des paramètres de phase et de gain dans les relations permettant l'exécution du procédé objet de l'invention est liée au caractère d'indépendance des variables de phase et ou de gain gouvernant l'expression des valeurs de phase respectivement de gain dans les fonctions représentatives des processus adaptatifs précités.

Pour la mise en oeuvre des exemples d'exécution d'estimation de la seule phase respectivement du seul gain selon les figures 3a et 3b précitées, on indique toutefois qu'il est opportun de disposer d'une connaissance assez précise de l'autre paramètre, c'est-à-dire du gain respectivement de la phase et réciproquement.

En réalité, la problématique relative à la connaissance de l'un ou de l'autre des paramètres précités et réciproquement existant en fait simultanément, chaque estimation doit normalement se baser sur les résultats de l'autre. Dans le cas où l'un des paramètres n'est pas correctement estimé, des risques de propagation d'erreur sont alors inévitables.

Un troisième exemple de mise en oeuvre du procédé objet de l'invention permet de supprimer les risques de propagation d'erreur précités dans les conditions ci-après, ce troisième exemple de mise en oeuvre consistant à estimer ces deux paramètres conjointement.

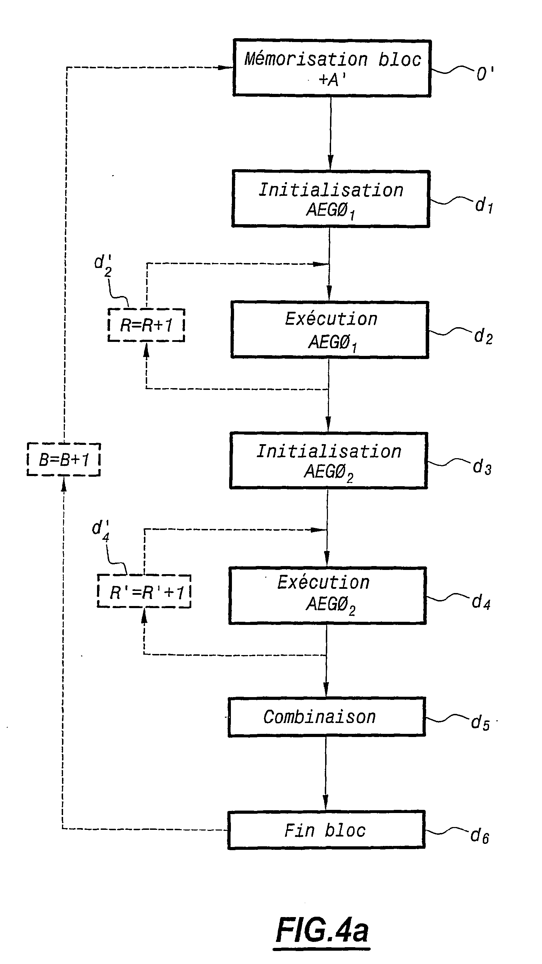

Le procédé de mise en oeuvre de l'estimation de la phase et du gain conforme à l'objet de la présente invention par estimation conjointe est maintenant décrit en liaison avec la figure 4a.

En référence à la figure 4a précitée, le procédé objet de l'invention consiste à effectuer une étape o' consistant en une estimation itérative des paramètres de gain et/ou de phase à partir d'une séquence de données d'observation $y_k$. Cette estimation itérative est effectuée à partir d'une boucle de gain-phase et permet d'estimer le gain et la phase de chaque donnée d'observation vis-à-vis des symboles de la modulation QAM considérée.

On comprend, en particulier, que l'étape o' précitée comporte, bien entendu, la mémorisation d'un bloc de données d'observation $y_k$, accompagnée de l'exécution d'une étape désignée a' correspondant sensiblement à l'étape A de la figure 2a. En particulier, l'étape A' peut correspondre à l'exécution de la fonction itérative désignée à l'étape A et de la fonction itérative relative au gain désigné à cette même étape.

Pour réaliser la mise en oeuvre de l'étape A' et selon une variante de mise en oeuvre préférentielle non limitative, l'utilisation de deux fonctions itératives de phase respectivement de gain séparées peut être avantageusement remplacées par l'appel d'un processus adaptatif de gain respectivement de phase dans lesquels la valeur de $L^k$ liste des valeurs de log-vraisemblance sur tous les bits est arbitrairement prise égale à 0. Dans ces conditions, le processus adaptatif d'estimation de gain respectivement de phase est alors mis en oeuvre vis-à-vis de chaque symbole, chacun des symboles de la modulation QAM étant considéré équiprobable. Cette hypothèse est suffisante pour assurer un degré de précision admissible pour la seule étape d'initialisation.

Suite à l'étape o' précitée, le procédé d'estimation conjointe des paramètres de gain et de phase objet de l'invention, tel que représenté à la figure 4a, consiste à appeler une étape d1 consistant à initialiser un premier processus adaptatif de façon à fixer les premières valeurs de gain $G_0$ et de phase $\varphi_0$ estimée.

Pour la mise en oeuvre de l'estimation conjointe du gain respectivement de la phase, on indique que le procédé objet de l'invention consiste à traiter des données d'observation $y_k$ vérifiant la relation 16 :

$$(16)\ y_k = a_k G e^{i\theta k} + b_k \text{ pour } k \in [0, K].$$

Dans cette relation, $a_k$ désigne les symboles QAM, G désigne un gain parasite apporté par le canal de transmission, par exemple, et $\theta k$ désigne le déphasage parasite destiné à être traité. On comprend, en particulier, que l'étape d1 permet d'initialiser et fixer les premières valeurs de gain $G_0$ et de phase $\varphi_0$ estimés pour la mise en oeuvre du premier processus adaptatif noté $AEG\Phi_1$.

L'étape d'initialisation précitée est suivie d'une étape $d_2$ consistant à exécuter le premier processus adaptatif $AEG\Phi_1$ et comporte au moins une fonction d'estimation des paramètres de gain et de phase dépendant de la probabilité de vraisemblance, exprimée en termes de log-vraisemblance, de chaque donnée d'observation vis-à-vis de l'ensemble des bits constitutifs des symboles de la modulation QAM considérée.

L'exécution du premier processus adaptatif $AEG\Phi_1$ permet d'engendrer, par lecture des données d'observation $y_k$ de rang k dans un sens direct, une première suite de valeurs intermédiaires successives de valeur de gain $G_0$ à $G_K$ respectivement $\varphi_0$ à $\varphi_K$.

L'étape $d_2$ est suivie d'une étape $d_3$ consistant à initialiser un deuxième processus adaptatif de gain et de phase $AEG\Phi_2$ de façon à fixer les premières valeurs du deuxième processus adaptatif à partir des dernières valeurs de gain respectivement de phase estimées obtenues suite à l'exécution du premier processus adaptatif $AEG\Phi_1$.

Le deuxième processus adaptatif $AEG\Phi_2$ est alors exécuté, ce processus adaptatif comportant au moins une fonction d'estimation des paramètres de gain respectivement de phase dépendantes de la valeur de la probabilité de vraisemblance, exprimée en termes de log-vraisemblance de chaque donnée d'observation vis-à-vis de l'ensemble des bits constitutifs des symboles de modulation QAM.

L'exécution du deuxième processus adaptatif $AEG\Phi_2$ permet d'engendrer, par lecture des données d'observation $y_k$ de rang k dans le sens inverse ou rétrograde, une deuxième suite de valeurs intermédiaires successives de gain respectivement de phase $G'_{K-1}$ à $G'_0$ et $\varphi'_{K-1}$ à $\varphi'_0$.

L'étape d4 précitée est alors suivie d'une étape d5 consistant à calculer la valeur finale du gain respectivement de la phase pour toute donnée d'observation $y_k$ de rang k comme une combinaison de la première et de la deuxième valeur intermédiaire de gain respectivement de phase de même rang k selon la relation 17 :

$$(17)\ G''_k = g(G_k, G'_k).$$

$$\varphi''_k = g(\varphi_k, \varphi'_k).$$

Dans la relation précédente, g désigne une fonction spécifique.

Pour la mise en oeuvre d'une estimation conjointe de phase et de gain, ainsi que décrit en liaison avec la figure 4a, on indique que le premier et le deuxième processus adaptatif $AEG\Phi_1$ et $AEG\Phi_2$ sont mis en oeuvre à partir d'une boucle de gain-phase, vérifiant la relation 18, 19 :

$$(18) \quad \varphi_k = \varphi_{k+\varepsilon} + \gamma_1 \frac{\sum_{j=1}^{M} \mathrm{Im}(y_k \overline{Q_j}) G_{k+\varepsilon} e^{-i\varphi k+\varepsilon}) W_j(y_k, L^k, \varphi_{k+\varepsilon}, G_{k+\varepsilon})}{\sum_{j=1}^{M} W_j(y_k, L^k, \varphi_{k+\varepsilon}, G_{k+\varepsilon})}$$

$$(19)$$

$$G_k = G_{k+\varepsilon} + \gamma_2 \frac{\sum_{j=1}^{M} (\mathrm{Re}(y_k \overline{Q_j} e^{-i\varphi k+\varepsilon}) - G_{k+\varepsilon} |Q_j|^2) W_j(y_k, L^k, \varphi_{k+\varepsilon}, G_{k+\varepsilon})}{\sum_{j=1}^{M} W_j(y_k, L^k, \varphi_{k+\varepsilon}, G_{k+\varepsilon})}$$

Dans les relations précédentes, on rappelle que, de même que dans le cas de la mise en oeuvre de l'estimation de la seule phase respectivement du seul gain, le paramètre $\varepsilon$ est pris égal à -1 pour le premier processus adaptatif $AEG\Phi_1$ mais pris égal à la valeur +1 pour le deuxième processus adaptatif $AEG\Phi_2$.

En outre, les paramètres $\gamma 1$ et $\gamma 2$ désignent une fonction de filtrage spécifique choisie en fonction du type de modulation QAM. Le choix peut être effectué de manière comparable à celui qui a été indiqué pour le choix du paramètre $\gamma$ dans l'exemple de mise en oeuvre de l'estimation de la seule phase respectivement du seul gain.

Pour la mise en oeuvre d'une estimation conjointe de la phase et du gain, le poids ou valeur de confiance exprimé en termes de log-vraisemblance attribuée au symbole $Qj$ vis-à-vis de la donnée d'observation doit également être calculé conjointement sur les paramètres de phase et de gain.

Dans cette hypothèse le poids ou valeur de confiance précité vérifie la relation (20) :

$$(20) \quad W_j(y_n, L^n, \theta, G) = \exp\left(\frac{1}{2} \sum_{m=1}^{N} q_m^j L_m^n - \frac{|y_n - G e^{+i\theta} Q_j|^2}{\sigma_b^2}\right)$$

Dans la relation précitée $G$ désigne le gain et $\theta$ désigne la phase estimés pour la donnée d'observation $y_n$ considérée et $L^n$ désigne la valeur de log-vraisemblance sur tous les bits $L^n = (L^n_1, ..., L^n_N)$.

Dans tous les cas de mise en oeuvre du procédé objet de l'invention représentés en figures 3a, 3b et 4a, les étapes d'exécution du processus adaptatif b2, b4 ; c2, c4 et d2, d4 peuvent être répétées sur un nombre d'itérations b'2, b'4 ; c'2, c'4 et d'2, d'4 symbolisées par les boucles R=R+1, R'=R'+1 afin d'améliorer la précision des calculs, le nombre d'itérations pouvant atteindre 3 ou 4.

Une boucle de gain phase conforme à l'objet de la présente invention est maintenant décrite en liaison avec la figure 4b.

La boucle de gain phase précitée comprend un sommateur 40 recevant sur ses entrées de sommation les paramètres de phase $\varphi_{k+\varepsilon}$ et de gain $G_{k+6}$ estimés pour la donnée d'observation précédente et terme correctif de phase $CArg_k(I_m, W_j)$ respectivement de gain $CM_k(R_{ek}, W_j)$ et délivre les paramètres de phase $\varphi_k$ et/ou de gain $G_k$ estimés pour la donnée d'observation courante $\gamma_k$ de rang k. Un module fonctionnel 42 d'argument de phase F respectivement de gain G est prévu lequel, recevant la donnée d'observation courante $y_k$ de rang k, les paramètres de phase et de gain $\varphi_{k+6}$, $G_{k+\varepsilon}$ estimés pour la donnée d'observation précédente, les symboles Q1 à QM de l'alphabet des symboles QAM et la liste des valeurs de log-vraisemblance sur tous les bits $L^k$, délivre un argument de phase et/ou de gain. Un filtre 42 $\gamma 1, \gamma 2$ appliqué à l'argument de phase et/ou de gain délivre le terme correctif de phase et/ou de gain au sommateur 40. La boucle de phase représentée en figure 4b peut être formée par un module logiciel ou un calculateur dédié.

Le procédé objet de l'invention, en particulier lors de sa mise en oeuvre pour une estimation conjointe de la phase et du gain, peut avantageusement être mis en oeuvre dans le cas des transmissions monoporteuse et multiporteuses.

On comprend, en particulier, qu'en raison du degré de précision atteint, notamment dans le cas de la mise en oeuvre d'une estimation conjointe de la phase et du gain, ce procédé permet une mise en oeuvre sur une large plage de fréquences, en particulier lorsqu'il s'agit d'une transmission multiporteuses. On conçoit, en effet, que la variabilité du canal de transmission fonction de la fréquence de transmission n'est pas la même en fonction de la fréquence porteuse. La souplesse de mise en oeuvre du procédé objet de la présente invention dans cette situation apparaît particulièrement attrayante, en raison de la précision des résultats obtenus indépendamment de la variabilité du canal de transmission et des conditions de transmission multiporteuses.

En particulier, dans le cas d'une transmission multiporteuses, le procédé objet de l'invention peut être mis en oeuvre de façon indépendante sur un nombre réduit de sous-porteuses constitutives du système multiporteuses, étant entendu que la notion d'indépendance revient finalement à qualifier les paramètres, tels que les paramètres de filtrage $\gamma$, par exemple, en fonction de la valeur de la fréquence de la sous-porteuse.

En outre, le procédé objet de l'invention dans cette situation peut alors consister avantageusement à interpoler les valeurs de gain et/ou de phase sur les autres sous-porteuses du système multiporteuses en raison des valeurs de fréquence des sous-porteuses considérées. On comprend, bien entendu, qu'ainsi il est possible d'ajuster par interpolation les valeurs de gain et/ou de phase pour obtenir une précision optimale.

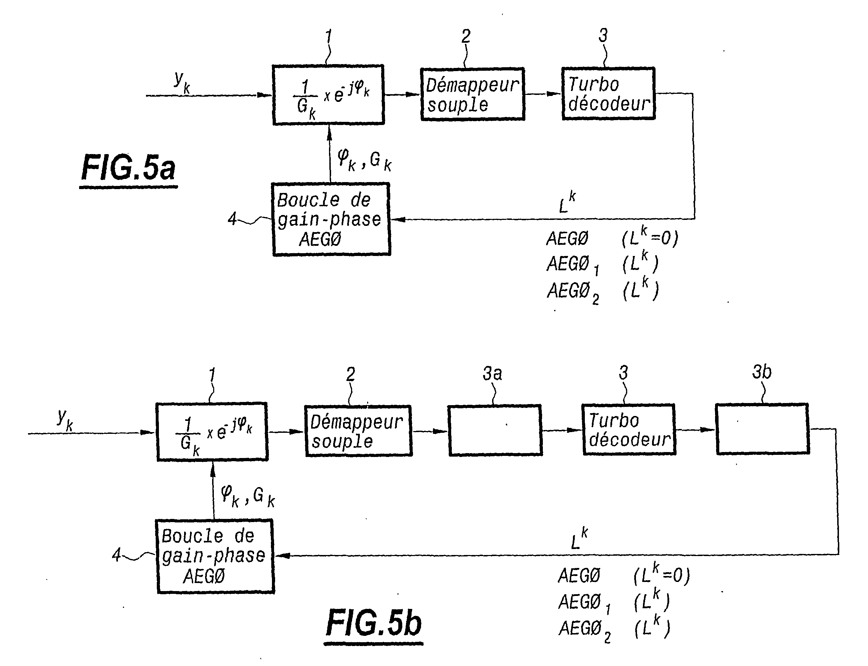

La mise en oeuvre du procédé d'estimation conjointe du gain et de la phase conforme à l'objet de la présente invention, tel que décrit en figure 4a, peut bien entendu être réalisée dans un système de réception, un récepteur tel que représenté en figure 5a, en sortie du démodulateur complexe de ce dernier, délivrant les données d'observation $y_k$.

Au niveau du récepteur précité, en sortie du démodulateur complexe non représenté au dessin sur la figure 5a, celui-ci comprend un module de traitement de gain et de phase 1 permettant d'appliquer la valeur du déphasage estimé $\varphi_k$ pour la donnée d'observation $y_k$ de rang k, ainsi que la valeur de gain $G_k$ estimée. L'application de la valeur du gain estimé $G_k$ doit être comprise comme effectuée dans la boucle de contrôle automatique de gain du récepteur. Le module 1 de traitement de gain et de phase, est suivi alors d'un démappeur souple 2, lequel est lui-même suivi d'un turbo-décodeur 3. Le turbo-décodeur 3 délivre alors les informations souples, c'est-à-dire $L^k$ désignant la liste des valeurs de log-vraisemblance sur tous les bits, laquelle permet de calculer le poids ou valeur de confiance exprimée en termes de log-vraisemblance attribuée au symbole $Q_j$ vis-à-vis de la donnée d'observation. Cette valeur de poids ou valeur de confiance est donnée pour les valeurs de phase respectivement de gain selon les relations 7 et 8 précédemment mentionnées dans la description. Les valeurs précitées $L^k$ sont délivrées alors à une boucle de gain-phase mettant en oeuvre la fonction AEGΦ et le processus itératif, boucle de gain-phase portant la référence 4 et délivrant les paramètres de phase $\varphi_k$ respectivement de gain $G_k$ estimé, pour la donnée d'observation $y_k$ considérée, au module 1 de traitement de gain et de phase.

Bien entendu, pour la mise en oeuvre du procédé objet de l'invention selon une détection conjointe de la phase respectivement du gain, on considère pour l'initialisation à l'étape o' la mise en oeuvre du processus itératif d'initialisation par l'intermédiaire du module 4 dans lequel on impose $L^k= 0$ quel que soit k, le module 4 délivrant alors les valeurs d'initialisation à partir d'un processus simplement itératif noté $AEGΦ(L^k=0)$ et l'on exécute ensuite le processus d'initialisation et d'exécution des deux processus adaptatifs $AEGΦ_1$ respectivement $AEGΦ_2$.

En ce qui concerne le module 1 de traitement d'amplitude et de phase le démappeur souple 2 et le turbo-décodeur 3, ces modules ne seront pas décrits en détail, car ils correspondent à des éléments connus de l'état de la technique.

Le module de boucle de gain-phase 4 est un module de traitement numérique comportant les fonctions mettant en oeuvre la boucle de gain-phase vérifiant les relations 18, 19 et 20 précédemment données dans la description, tel que décrit en liaison avec la figure 4b.

Enfin, ainsi que représenté en figure 5b, lorsque la transmission des symboles QAM est effectuée avec un entrelacement de suites de bits émises, provoquant un entrelacement des symboles QAM émis, le récepteur objet de l'invention comporte, un module désentrelaceur 3a, placé en amont du turbo-décodeur 3 et un module entrelaceur 3b placé en sortie du turbo-décodeur 3, c'est-à-dire en amont de la boucle de gain-phase 4.

Le mode opératoire des modules des entrelaceurs et entrelaceur précités ne sera pas décrit en détail car il correspond à un processus connu de l'état de la technique. Il permet d'effectuer un levée d'ambiguïté de phase de $q\dfrac{\pi}{2}$ q entier, sur les données d'observation et finalement les symboles émis.

**Revendications**

1. Procédé d'estimation de paramètres de phase et/ou de gain de données d'observation mémorisées correspondant à une succession de symboles numériques formés par une suite de bits en modulation QAM transmis par un canal de transmission, comprenant les étapes consistant à :

   a) effectuer une estimation itérative desdits paramètres de phase et/ou de gain à partir d'une séquence de données d'observation, ladite estimation itérative étant effectuée à partir d'une loi de phase et/ou de gain spécifique du type modulation QAM reliant la phase estimée des données d'observation successives de ladite séquence ;
   b) exécuter un processus adaptatif d'estimation, comportant au moins une fonction d'estimation desdits paramètres de phase et/ou de gain dépendant de la valeur de la probabilité de vraisemblance, exprimée en termes de log-vraisemblance,
   **caractérisé en ce qu'**il consiste au moins à :
   c) initialiser au moins le processus adaptatif d'estimation desdits paramètres de phase et/ou de gain, à partir de l'une au moins des valeurs de phase et/ou de gain successives estimées desdites données d'observation et **en ce que** la valeur de probabilité de vraisemblance est calculée pour chaque donnée d'observation vis-à-vis de l'ensemble des bits constitutifs desdits symboles.

2. Procédé selon la revendication 1, **caractérisé en ce que** ladite loi de phase et/ou de gain spécifique vérifie la relation :

$$\varphi_k = \varphi_{k-1} + \gamma \, F(y_k, \varphi_{k-1}) \, ; \, G_k = G_{k-1} + \gamma G(y_k, G_{k-1})$$

   relation dans laquelle:

   $\varphi_k, \varphi_{k-1}$ désignent la valeur de la phase estimée de la donnée d'observation $y_K$ respectivement $yk$ - 1 de rang respectif k et k-1 ;
   $G_k, G_{k-1}$ désignent la valeur de gain estimée de la donnée d'observation $y_k$ respectivement $yk$ - 1 de rang respectif k et k-1 ;
   F et G désignent respectivement une fonction spécifique dépendant du type de modulation QAM utilisé ;
   $\gamma$ désigne une fonction de filtrage prédéterminée.

3. Procédé selon la revendication 1 ou 2, **caractérisé en ce que** ledit processus adaptatif comporte une fonction itérative d'estimation de la phase respectivement du gain estimés de chaque donnée d'observation $y_k$ de rang k vis-à-vis de tous les symboles de la modulation QAM considérée, compte tenu de la probabilité de vraisemblance, exprimée en termes de log-vraisemblance, de chaque donnée d'observation vis-à-vis de l'ensemble des bits constitutifs des symboles.

4. Procédé selon la revendication 3, **caractérisé en ce que** ladite fonction itérative d'estimation de la phase de chaque donnée d'observation vérifie la relation :

$$\varphi_k = \varphi_{k-1} + \gamma \frac{\sum_{j=1}^{M} \text{Im}(y_k \overline{Q_j} e^{-i\varphi k-1}) W_j(y_k, L^k, \varphi_{k-1})}{\sum_{j=1}^{M} W_j(y_k, L^k, \varphi_{k-1})}$$

   relation dans laquelle :

   $\gamma$ désigne la fonction de filtrage prédéterminée ;

   $\text{Im}(y_k \overline{Q_j} e^{-i\varphi k-1})$ désigne la partie imaginaire du nombre complexe produit de la donnée d'observation $y_k$ de rang k et du symbole conjugué $\overline{Qj}$ du symbole $Q_J$ corrigé par l'argument de phase $\varphi_{k-1}$ estimé à l'itération précédente ;

$W_j(y_k, L^k, \varphi_{k-1})$ désigne le poids ou valeur de confiance, exprimée en termes de vraisemblance, attribuée au symbole $Q_j$ vis-à-vis de la donnée d'observation.

**5.** Procédé selon la revendication 3 ou 4, **caractérisé en ce que** ladite fonction itérative d'estimation du gain de chaque donnée d'observation vérifie la relation :

$$G_k = G_{k-1} + \gamma \frac{\sum_{j=1}^{M}(\text{Re}(y_k \overline{Q_j}) - G_{k-1}|Q_j|^2) W_j(y_k, L^k, G_{k-1})}{\sum_{j=1}^{M} W_j(y_k, L^k, G_{k-1})}$$

relation dans laquelle :

$\gamma$ désigne la fonction de filtrage prédéterminée ;

$\text{Re}(y_k \overline{Q_j})$ désigne la partie réelle du nombre complexe produit de la donnée d'observation $y_k$ de rang k et du symbole conjugué $\overline{Q_j}$ du symbole $Q_j$ ;

$W_j(y_k, L^k, G_{k-1})$ désigne le poids ou valeur de confiance, exprimée en termes de vraisemblance attribuée au symbole $Q_j$ vis-à-vis de la donnée d'observation.

**6.** Procédé selon l'une des revendications 1 à 5, **caractérisé en ce que** pour une estimation de la phase, le poids ou valeur de confiance, exprimée en termes de vraisemblance attribuée au symbole $Q_j$ vis-à-vis de la donnée d'observation vérifie la relation :

$$Wj(y_n, L^n, \theta) = \exp\left(\frac{1}{2}\sum_{m=1}^{N} q_m^j L_m^n - \frac{|y_n - e^{+i\theta}Q_j|^2}{\sigma_b^2}\right)$$

relation dans laquelle :

exp désigne la fonction exponentielle ;

$q_m^j$ désigne le m$^{\text{eme}}$ bit du symbole $Q_j$ de la modulation QAM ;

$L_m^n$ désigne la valeur de log-vraisemblance de la donnée d'observation sur le m$^{\text{eme}}$ bit du n$^{\text{eme}}$ symbole QAM ;

$L^n$ désigne la liste des valeurs de log-vraisemblance sur tous les bits, $L^n = (L_1^n, ... L_N^n)$ ;

$\sigma_b^2$ désigne la puissance du bruit pour le canal de transmission considéré ;

$\theta$ désigne l'argument de phase estimé.

**7.** Procédé selon l'une des revendications 1 à 6, **caractérisé en ce que** pour une estimation du gain, le poids ou valeur de confiance, exprimée en termes de vraisemblance attribuée au symbole $Q_j$ vis-à-vis de la donnée d'observation vérifie la relation :

$$W_j(y_n, L^n, G) = \exp\left(\frac{1}{2}\sum_{m=1}^{N} q_m^j L_m^n - \frac{|y_n - GQ_j|^2}{\sigma_b^2}\right)$$

relation dans laquelle :

exp désigne la fonction exponentielle ;

$q_m^j$ désigne le m$^{em}$ bit du symbole Q$_j$ de la modulation QAM ;

$L_m^n$ est la valeur de log-vraisemblance de la donnée d'observation sur le m$^{em}$ bit du n$^{em}$ symbole QAM ;

L$^n$ désigne la liste des valeurs de log-vraisemblance sur tous les bits, $L^n = (L_1^n, \ldots . L_N^n)$ ;

$\sigma_b^2$ désigne la puissance du bruit pour le canal de transmission considéré ;

G désigne la valeur de gain estimée.

**8.** Procédé selon l'une des revendications 1 à 4, **caractérisé en ce que** pour l'estimation du paramètre de phase, celui-ci consiste à, suite à l'étape o) consistant à effectuer l'estimation itérative des paramètres de phase à partir d'une loi de phase spécifique reliant la phase estimée des données d'observation successives de ladite séquence :

- b1) initialiser un premier processus adaptatif, de façon à fixer les premières valeurs du premier processus adaptatif, telles que la valeur de phase dernièrement estimée ;
- b2) exécuter un premier processus adaptatif comportant au moins une fonction d'estimation desdits paramètres de phase dépendant de la valeur de la probabilité de vraisemblance, exprimée en termes de log-vraisemblance de chaque donnée d'observation vis-à-vis de l'ensemble des bits constitutifs desdits symboles, pour engendrer, par lecture des données d'observation $y_k$ de rang k dans un sens direct, une première suite de valeurs intermédiaires successives de déphasage estimées, $\varphi_o$, à $\varphi_K$ ;
- b3) initialiser un deuxième processus adaptatif, de façon à fixer les premières valeurs du deuxième processus adaptatif, à partir de la dernière valeur intermédiaire de déphasage estimée obtenue suite à exécution du premier processus adaptatif ;
- b4) exécuter le deuxième processus adaptatif comportant au moins une fonction d'estimation desdits paramètres de phase dépendant de la valeur de la probabilité de vraisemblance, exprimée en termes de log-vraisemblance de chaque donnée d'observation vis-à-vis de l'ensemble des bits constitutifs desdits symboles, pour engendrer, par lecture des données d'observation $y_k$ de rang k dans le sens inverse, une deuxième suite de valeurs intermédiaires successives de déphasage estimées, $\varphi'_{K-1}$ à $\varphi'_o$ ;
- b5) calculer la valeur finale du déphasage estimé $\varphi''_K$ pour toute donnée d'observation $y_k$ de rang k comme une combinaison de la première et de la deuxième valeur de déphasage de même rang k selon la relation :

$$\varphi''_k = g(\varphi_k, \varphi'_k).$$

**9.** Procédé selon les revendications 4 et 8, **caractérisé en ce que** le premier et le deuxième processus adaptatif sont mis en oeuvre par l'intermédiaire d'une première respectivement d'une deuxième boucle de phase vérifiant la relation :

$$\varphi_k = \varphi_{k+\varepsilon} + \gamma \frac{\sum_{j=1}^{M} \mathrm{Im}(y_k \overline{Q}_j e^{-l\varphi k+\varepsilon}) W_j(y_k, L^k, \varphi_{k+\varepsilon})}{\sum_{j=1}^{M} W_j(y_k, L^k, \varphi_{k+\varepsilon})}$$

avec $\varepsilon$ = -1 pour le premier processus adaptatif, $\varepsilon$ = +1 pour le deuxième processus adaptatif.

**10.** Procédé selon l'une des revendications 1 à 5, **caractérisé en ce que** pour l'estimation du paramètre de gain, celui-ci consiste à, suite à l'étape o) consistant à effectuer l'estimation itérative des paramètres de gain à partir d'une loi de gain spécifique reliant le gain estimé des données d'observation successives de ladite séquence :

- c1) initialiser un premier processus adaptatif de façon à fixer les premières valeurs du premier processus adaptatif telles que la valeur de gain dernièrement estimée ;

- c2) exécuter ledit premier processus adaptatif comportant au moins une fonction d'estimation desdits paramètres de gain dépendant de la valeur de la probabilité de vraisemblance, exprimée en termes de log-vraisemblance, de chaque donnée d'observation vis-à-vis de l'ensemble des bits constitutifs desdits symboles, pour engendrer par lecture des données d'observation $y_k$ de rang k dans un sens direct, une première suite de valeurs intermédiaires successives de gain $G_o$ à $G_K$ ;

- c3) initialiser un deuxième processus adaptatif de façon à fixer les premières valeurs du deuxième processus adaptatif, à partir de la dernière valeur de gain estimée obtenue suite à exécution du premier processus adaptatif ;

- c4) exécuter le deuxième processus adaptatif comportant au moins une fonction d'estimation desdits paramètres de gain dépendant de la valeur de la probabilité de vraisemblance, exprimée en termes de log-vraisemblance, de chaque donnée d'observation vis-à-vis de l'ensemble des bits constitutifs desdits symboles, pour engendrer, par lecture des données d'observation $y_k$ de rang k dans le sens inverse une deuxième suite de valeurs intermédiaires successives de gain $G'_{K-1}$ à $G'_o$.

- c5) calculer la valeur finale du gain estimé $G''_k$ pour toute donnée d'observation $y_k$ de rang k comme une combinaison de la première et de la deuxième valeur de gain de même rang k selon la relation :

$$G''_k = g(G_k, G'_k).$$

11. Procédé selon les revendications 5 et 10, **caractérisé en ce que** le premier et le deuxième processus adaptatif sont mis en oeuvre par l'intermédiaire d'une première respectivement d'une deuxième boucle de gain vérifiant la relation :

$$G_k = G_{k+\varepsilon} + \gamma \frac{\sum_{j=1}^{M}(\mathrm{Re}(y_k\overline{Q_j}) - G_{k+\varepsilon}|Q_j|^2)W_j(y_k, L^k, G_{k+\varepsilon})}{\sum_{j=1}^{M}W_j(y_k, L^k, G_{k+\varepsilon})}.$$

avec $\varepsilon$ = -1 pour le premier processus adaptatif, $\varepsilon$ = +1 pour le deuxième processus adaptatif.

12. Procédé selon l'une des revendications 1 à 7, **caractérisé en ce que** pour une estimation conjointe des paramètres de gain et de phase, celui-ci consiste à :

o') effectuer une estimation itérative desdits paramètres de gain et/ou de phase à partir d'une séquence de données d'observation, ladite estimation itérative étant effectuée à partir d'une boucle de gain-phase, ladite étape d'estimation itérative permettant d'estimer le gain et la phase de chaque donnée d'observation vis-à-vis des symboles de la modulation QAM ;

d1) initialiser un premier processus adaptatif de façon à fixer les premières valeurs de gain $G_o$ et de phase $\varphi_o$ estimées ;

d2) exécuter ledit premier processus adaptatif comportant au moins une fonction d'estimation desdits paramètres de gain et de phase dépendant de la probabilité de vraisemblance, exprimée en termes de log-vraisemblance de chaque donnée d'observation vis-à-vis de l'ensemble des bits constitutifs desdits symboles pour engendrer par lecture des données d'observation $y_k$ de rang k dans un sens direct une première suite de valeurs intermédiaires successives de valeurs de gain $G_o$ à $G_K$ respectivement de phase $\varphi_o$ à $\varphi_K$ ;

d3) initialiser un deuxième processus adaptatif de façon à fixer les premières valeurs du deuxième processus adaptatif, à partir de la dernière valeur de gain respectivement de phase estimée obtenue suite à exécution dudit premier processus adaptatif,

d4) exécuter ledit deuxième processus adaptatif comportant au moins une fonction d'estimation desdits paramètres de gain respectivement de phase dépendant de la valeur de la probabilité de vraisemblance, exprimée en termes de log-vraisemblance, de chaque donnée d'observation vis-à-vis de l'ensemble des bits constitutifs desdits symboles, pour engendrer, par lecture des données d'observation $y_k$ de rang k dans le sens inverse une deuxième suite de valeurs intermédiaires successives de gain respectivement de phase $G'_{K-1}$ à $G'_o$ respectivement $\varphi'_{K-1}$ à $\varphi'_o$ ;

d5) calculer la valeur finale du gain respectivement de la phase pour toute donnée d'observation $y_k$ de rang k comme une combinaison de la première et de la deuxième valeur intermédiaire de gain respectivement de phase de même rang k selon la relation :

$$G''_k = g(G_k, G'_k).$$

$$\varphi''_k = g(\varphi_k, \varphi'_k).$$

relation dans laquelle g désigne une fonction spécifique.

**13.** Procédé selon la revendication 12, **caractérisé en ce que** lesdits premier et deuxième processus adaptatif sont mis en oeuvre à partir d'une boucle de gain-phase vérifiant la relation

$$\varphi_k = \varphi_{k+\varepsilon} + \gamma_1 \frac{\sum_{j=1}^{M} \operatorname{Im}(y_k \overline{Q_j}) G_{k+\varepsilon} e^{-i\varphi k+\varepsilon)} W_j(y_k, L^k, \varphi_{k+\varepsilon}, G_{k+\varepsilon})}{\sum_{j=1}^{M} W_j(y_k, L^k, \varphi_{k+\varepsilon}, G_{k+\varepsilon})}$$

$$G_k = G_{k+\varepsilon} + \gamma_2 \frac{\sum_{j=1}^{M} (\operatorname{Re}(y_k \overline{Q_j} e^{-i\varphi k+\varepsilon}) - G_{k+\varepsilon} |Q_j|^2) W_j(y_k, L^k, \varphi_{k+\varepsilon}, G_{k+\varepsilon})}{\sum_{j=1}^{M} W_j(y_k, L^k, \varphi_{k+\varepsilon}, G_{k+\varepsilon})}$$

avec $\varepsilon$ = -1 pour le premier processus adaptatif, $\varepsilon$ = +1 pour le deuxième processus adaptatif.
$\gamma_1$ et $\gamma_2$ désignant une fonction de filtrage spécifique choisies en fonction du type de modulation QAM.

**14.** Procédé selon l'une des revendications 12 ou 13, **caractérisé en ce que** pour une estimation conjointe du gain et de la phase, le poids ou valeur de confiance, exprimée en termes de vraisemblance attribuée au symbole $Q_j$ vis-à-vis de la donnée d'observation vérifie la relation :

$$W_j(y_n, L^n, \theta, G) = \exp\left(\frac{1}{2} \sum_{m=1}^{N} q_m^j L_m^n - \frac{|y_n - Ge^{+i\theta} Q_j|^2}{\sigma_b^2}\right)$$

relation dans laquelle :

exp désigne la fonction exponentielle ;

$q_m^j$ désigne le $m^e$ bit du symbole $Q_j$ de la modulation QAM ;

$L_m^n$ désigne la valeur de log-vraisemblance de la donnée d'observation sur le $m^{ème}$ bit du $n^{em}$ symbole QAM ;
$L^n$ désigne la liste des valeurs de log-vraisemblance sur tous les bits,

$\sigma_b^2$ désigne la puissance du bruit pour le canal de transmission considéré ;
$\theta$ désigne l'argument de phase estimé ;
G désigne le gain estimé.

**15.** Procédé selon l'une des revendications 8 à 14, **caractérisé en ce que** chaque étape d'exécution du processus adaptatif est répétée sur un nombre d'itérations déterminé.

**16.** Procédé d'estimation de phase et/ou de gain selon l'une des revendications 1 à 13 précédentes en transmission monoporteuse ou multiporteuses.

**17.** Procédé selon la revendication 16, **caractérisée en ce que** dans le cas d'une transmission multiporteuses,

α) on met en oeuvre le procédé indépendamment sur un nombre réduit de sous-porteuses constitutives du système multiporteuses ; et

β) on interpole les valeurs de gain et/ou de phase sur les autres sous-porteuses du système multiporteuses, en raison des valeurs de fréquences des sous-porteuses considérées.

**18.** Boucle de gain-phase d'estimation adaptative du gain et/ou de la phase d'une donnée d'observation courante vis-à-vis du gain et/ou de la phase d'une donnée d'observation précédente, vis-à-vis d'un ensemble de symboles transmis en modulation QAM par un canal de transmission, à partir de la valeur de probabilité de vraisemblance exprimée en termes de log-vraisémblance de chaque donnée d'observation vis-à-vis de l'ensemble des bits constitutifs de ces symboles, **caractérisée en ce que** ladite boucle de gain-phase comporte au moins :

- des moyens sommateurs recevant en entrée de sommation le paramètre de phase respectivement de gain pour la donnée d'observation précédente et un terme correctif d'argument de phase respectivement de gain et délivrant le paramètre de phase respectivement de gain estimé pour la donnée d'observation courante ;
- un module fonctionnel d'argument de phase et/ou de gain en cascade avec un module de filtrage, ledit module fonctionnel de phase et/ou de gain recevant lesdits paramètres de phase respectivement de gain pour la donnée d'observation précédente, ladite donnée d'observation courante et la liste des valeurs de log-vraisemblance sur tous les bits de la donnée d'observation vis-à-vis de chaque symbole de la modulation QAM et délirant audit module de filtrage une valeur proportionnelle à la valeur de l'argument de phase mesurée de la donnée d'observation courante pondérée par le poids ou valeur de confiance de cette donnée d'observation courante vis-à-vis de l'ensemble des symboles de la modulation QAM respectivement une valeur proportionnelle à la valeur d'écart de gain relatif de la donnée d'observation courante et du gain estimé de la donnée d'observation précédente vis-à-vis d'un symbole donné de la modulation QAM, pondérée par le poids ou valeur de confiance exprimée en terme de log-vraisemblance attribuée au symbole vis-à-vis de l'ensemble de ces symboles, ledit filtre délivrant ledit terme correctif d'argument de phase et/ou d'élément de gain auxdits moyens sommateurs.

**19.** Récepteur de données d'observation numériques transmises en modulation QAM sur un canal de transmission, **caractérisé en ce qu'**il comporte au moins en combinaison, en entrée du démodulateur complexe, un module de traitement de gain et de phase permettant d'appliquer la valeur de déphasage et de gain estimée pour la durée d'observation courante, un démappeur souple et un turbo-décodeur, ledit turbo-décodeur délivrant les informations souples, liste des valeurs de log-vraisemblance attribuée au symbole $Q_j$ vis-à-vis des données d'observation, une boucle de gain-phase, selon la revendication 18.

**20.** Récepteur selon la revendication 19, **caractérisé en ce que**, pour une émission des données d'observation avec entrelacement des symboles QAM émis, ledit récepteur comporte :

- un module désentrelaceur placé en amont du turbo-décodeur ;
- un module entrelaceur placé en amont de ladite boucle de gain phase, ce qui permet d'effectuer une levée d'ambiguïté de phase sur les données d'observation reçues.

**Claims**

**1.** Process for estimating phase and/or gain parameters of stored observational data corresponding to a succession of digital symbols formed by a series of QAM modulation bits transmitted through a transmission channel, comprising steps consisting of:

a) carrying out an iterative estimation of said phase and/or gain parameters from a sequence of observational data, said iterative estimation being carried out on the basis of a phase and/or gain law specific to the QAM modulation type linking the estimated phase of the successive observational data of said sequence;

b) executing an adaptive estimation process, comprising at least one function of estimating said phase and/or gain parameters dependent on the likelihood probability value, expressed in terms of log-likelihood, **characterised in that** it consists at least in:

c) initiating at least the adaptive process for estimating said phase and/or gain parameters from at least one of the estimated successive phase and/or gain values of said observational data, and **in that** the likelihood probability value is calculated for each observational data item in relation to all the bits that make up said symbols.

2. Process according to claim 1, **characterised in that** said law of specific phase and/or gain verifies the equation:

$$\varphi_k = \varphi_{k-1} + \gamma F(y_k, \varphi_{k-1}); \; G_k = G_{k-1} + \gamma G(y_k, G_{k-1})$$

wherein:

$\varphi_k$, $\varphi_{k-1}$ denote the value of the estimated phase of the observational data item $y_k$ or $y_{k-1}$, respectively, of rank k and k-1, respectively;

$G_k, G_{k-1}$ denote the estimate gain value of the observational data item $y_K$ or $y_K$-1, respectively, of the respective rank k and k-1;

F and G respectively designate a specific function dependent on the type of QAM modulation used;

$\gamma$ denotes a predetermined filtering function.

3. Process according to claim 1 or 2, **characterised in that** the said adaptive process comprises an iterative function of estimating the estimated phase or gain, respectively, of each observational data item $y_k$ of rank k relative to all the symbols of the QAM modulation under consideration, taking into account the likelihood probability, expressed in terms of log-likelihood, of each observational data item in relation to all the bits that make up the symbols.

4. Process according to claim 3, **characterised in that** the said iterative function of estimating the phase of each observational data item verifies the equation:

$$\varphi_k = \varphi_{k-1} + \gamma \frac{\sum_{j=1}^{M} \mathrm{Im}(y_k \overline{Q_j} e^{-i\varphi k-1}) W_j(y_k, L^k, \varphi_{k-1})}{\sum_{j=1}^{M} W_j(y_k, L^k, \varphi_{k-1})}$$

wherein:

$\gamma$ denotes the predetermined filtering function;

denotes the imaginary part of the complex number that is a product of the observational data item $y_k$ of rank k and the conjugated symbol of the symbol $Q_j$ corrected by the phase argument $\varphi_{k-1}$ estimated in the previous iteration;

$Wj(y_k, L^k, \varphi_{k-1})$ denotes the significance or confidence value, expressed in terms of probability, attributed to the symbol $Q_j$ relative to the observational data item.

5. Process according to claim 3 or 4, **characterised in that** the said iterative function of estimating the gain of each observational data item verifies the equation:

$$G_k = G_{k-1} + \gamma \frac{\sum_{j=1}^{M}(\mathrm{Re}(y_k \overline{Q_j}) - G_{k-1}|Q_j|^2)W_j(y_k, L^k, G_{k-1})}{\sum_{j=1}^{M}W_j(y_k, L^k, G_{k-1})}$$

wherein:

$\gamma$ denotes the predetermined filtering function;

denotes the real part of the complex number that is a product of the observational data item $y_k$ of rank k and the conjugated symbol of the symbol $Q_j$;

$W_j(y_k, L^k, G_{k-1})$ denotes the significance or confidence value, expressed in terms of likelihood, attributed to the symbol $Q_j$ relative to the observational data item.

6. Process according to one of claims 1 to 5, **characterised in that** for estimation of the phase, the significance or confidence value, expressed in terms of likelihood, attributed to the symbol $Q_j$ relative to the observational data item verifies the equation:

$$Wj(y_n, L^n, \theta) = \exp\left(\frac{1}{2}\sum_{m=1}^{N}q_m^j L_m^n - \frac{|y_n - e^{+i\theta}Q_j|^2}{\sigma_b^2}\right)$$

wherein:

exp denotes the exponential function;

denotes the $m^{th}$ bit of the symbol $Q_j$ of the QAM modulation;

denotes the log-likelihood value of the observational data item on the $m^{th}$ bit of the $n^{th}$ QAM symbol;

$L^n$ denotes the list of log-likelihood values on all the bits, ;

denotes the power of the noise for the transmission channel under consideration;

$\theta$ denotes the estimated phase argument.

7. Process according to one of claims 1 to 6, **characterised in that** for estimation of the gain, the significance or confidence value, expressed in terms of likelihood, attributed to the symbol $Q_j$ relative to the observational data item verifies the equation:

$$W_j(y_n, L^n, G) = \exp\left(\frac{1}{2}\sum_{m=1}^{N}q_m^j L_m^n - \frac{|y_n - GQ_j|^2}{\sigma_b^2}\right)$$

wherein:

exp denotes the exponential function;

denotes the $m^{th}$ bit of the symbol $Q_j$ of the QAM modulation;

is the log-likelihood value of the observational data item on the $m^{th}$ bit of the $n^{th}$ QAM symbol;

$L^n$ denotes the list of log-likelihood values on all the bits, ;

denotes the power of the noise for the transmission channel under consideration;

G denotes the estimated gain value.

8. Process according to one of claims 1 to 4, **characterised in that** for estimating the phase parameter, the latter comprises, after step o) consisting of carrying out the iterative estimation of the phase parameters on the basis of a specific phase law linking the estimated phase of the successive observational data of said sequence :

b1) initiating a first adaptive process so as to fix the first values of the first adaptive process, such as the phase value estimated last;

b2) carrying out a first adaptive process comprising at least one function of estimating the said phase parameters dependent on the likelihood probability value, expressed in terms of log-likelihood, of each observational data item relative to all the bits that make up the said symbols, in order to generate, by reading the observational data $y_k$ of rank k in a direct direction, a first series of estimated successive intermediate phase shift values, $\varphi_o$ to $\varphi_k$;

b3) initiating a second adaptive process, so as to fix the first values of the second adaptive process, from the last intermediate value of estimated phase shift obtained after the execution of the first adaptive process;

b4) carrying out the second adaptive process comprising at least one function of estimating the said phase parameters dependent on the likelihood probability value, expressed in terms of log-likelihood, of each observational data item relative to all the bits that make up the said symbols, in order to generate, by reading the observational data $y_k$ of rank k in the opposite direction, a second series of estimated successive intermediate phase shift values, $\varphi'_{k-1}$ to $\varphi'_o$;

b5) calculating the final value of the estimated phase shift $\varphi''_k$ for every observational data item $y_k$ of rank k as a combination of the first and second phase shift values of the same rank k according to the equation:

$$\varphi''_k = g(\varphi_k, \varphi'_k).$$

9.  Process according to claims 4 and 8, **characterised in that** the first and second adaptive processes are carried out by means of a first and second phase loop, respectively, verifying the equation:

$$\varphi_k = \varphi_{k+\varepsilon} + \gamma \frac{\sum_{j=1}^{M} \mathrm{Im}(y_k \overline{Q}_j e^{-i\varphi k+\varepsilon}) W_j(y_k, L^k, \varphi_{k+\varepsilon})}{\sum_{j=1}^{M} W_j(y_k, L^k, \varphi_{k+\varepsilon})}$$

where $\varepsilon$ = -1 for the first adaptive process, $\varepsilon$ = +1 for the second adaptive process.

10. Process according to one of claims 1 to 5, **characterised in that** for estimating the gain parameter, this comprises, following step o) consisting of carrying out the iterative estimation of the gain parameters from a specific gain law that links the estimated gain of the successive observational data of the said sequence:

c1) initiating a first adaptive process so as to fix the first values of the first adaptive process, such as the gain value estimated last;

c2) carrying out said first adaptive process comprising at least one function of estimating the said gain parameters dependent on the likelihood probability value, expressed in terms of log-likelihood, of each observational data item relative to all the bits that make up the said symbols, in order to generate, by reading the observational data $y_k$ of rank k in a direct direction, a first series of successive intermediate gain values $G_o$ to $G_k$;

c3) initiating a second adaptive process, so as to fix the first values of the second adaptive process, from the last estimated gain value obtained after the execution of the first adaptive process;

c4) carrying out the second adaptive process comprising at least one function of estimating the said gain parameters dependent on the likelihood probability value, expressed in terms of log-likelihood, of each observational data item relative to all the bits that make up the said symbols, in order to generate, by reading the observational data $y_k$ of rank k in the opposite direction, a second series of successive intermediate gain values $G'_{k-1}$ to $G'_o$.

c5) calculating the final value of the estimated gain $G''_k$ for every observational data item $y_k$ of rank k as a combination of the first and second gain values of the same rank k according to the equation:

$$G''_k = g(G_k, G'_k).$$

11. Process according to claims 5 and 10, **characterised in that** the first and second adaptive processes are carried out via a first or second gain loop, respectively, verifying the equation:

$$G_k = G_{k+\varepsilon} + \gamma \frac{\sum_{j=1}^{M}(\text{Re}(y_k \overline{Q_j}) - G_{k+\varepsilon}|Q_j|^2)W_j(y_k, L^k, G_{k+\varepsilon})}{\sum_{j=1}^{M} W_j(y_k, L^k, G_{k+\varepsilon})}$$

where $\varepsilon$ = -1 for the first adaptive process and $\varepsilon$ = +1 for the second adaptive process.

**12.** Process according to one of claims 1 to 7, **characterised in that** for jointly estimating the gain and phase parameters, this consists in:

o') carrying out an iterative estimation of said gain and/or phase parameters from a sequence of observational data, said iterative estimation being carried out from a gain-phase loop, said iterative estimation step making it possible to estimate the gain and phase of each observational data item relative to the symbols of the QAM modulation;

d1) initiating a first adaptive process in order to fix the estimated first gain and phase values $G_o$ and $\varphi_o$, respectively;

d2) executing said first adaptive process comprising at least one function of estimating said gain and phase parameters dependent on the likelihood probability, expressed in terms of log-likelihood, of each observational data item relative to all the bits that make up the said symbols, in order to generate, by reading the observational data $y_k$ of rank k in a direct direction, a first series of successive intermediate gain values $G_o$ to $G_k$ or phase values $\varphi_o$ to $\varphi_k$, respectively;

d3) initiating a second adaptive process, so as to fix the first values of the second adaptive process, from the last estimated gain or phase value, respectively, obtained after the execution of said first adaptive process;

d4) carrying out said second adaptive process comprising at least one function of estimating the said gain or phase parameters, respectively, dependent on the likelihood probability value, expressed in terms of log-likelihood, of each observational data item relative to all the bits that make up the said symbols, in order to generate, by reading the observational data $y_k$ of rank k in the opposite direction, a second series of successive intermediate gain or phase values, $G'_{k-1}$ to $G'_o$ or $\varphi_{k-1}$ to $\varphi'_o$, respectively;

d5) calculating the final gain or phase value, respectively, for every observational data item $y_k$ of rank k as a combination of the first and second intermediate gain or phase values, respectively, of the same rank k according to the equations:

$$G''_k = g(G_k, G'_k).$$

$$\varphi''_k = g(\varphi_k, \varphi'_k),$$

wherein g denotes a specific function.

**13.** Process according to claim 12, **characterised in that** the said first and second adaptive processes are carried out starting from a gain-phase loop that verifies the equation

$$\varphi_k = \varphi_{k+\varepsilon} + \gamma_1 \frac{\sum_{j=1}^{M}\text{Im}(y_k \overline{Q_j})G_{k+\varepsilon}e^{-i\varphi k+\varepsilon})W_j(y_k, L^k, \varphi_{k+\varepsilon}, G_{k+\varepsilon})}{\sum_{j=1}^{M} W_j(y_k, L^k, \varphi_{k+\varepsilon}, G_{k+\varepsilon})}$$

$$G_k = G_{k+\varepsilon} + \gamma_2 \frac{\sum\limits_{j=1}^{M}(\mathrm{Re}(y_k \overline{Q_j} e^{-i\varphi k+\varepsilon}) - G_{k+\varepsilon}|Q_j|^2)W_j(y_k, L^k, \varphi_{k+\varepsilon}, G_{k+\varepsilon})}{\sum\limits_{j=1}^{M} W_j(y_k, L^k, \varphi_{k+\varepsilon}, G_{k+\varepsilon})}$$

wherein $\varepsilon = -1$ for the first adaptive process and $\varepsilon = +1$ for the second adaptive process,
$\gamma_1$ and $\gamma_2$ denote a specific filtering function selected as a function of the type of QAM modulation.

**14.** Process according to one of claims 12 or 13, **characterised in that** for a joint estimation of the gain and phase, the significance or confidence value, expressed in terms of likelihood, attributed to the symbol $Q_j$ relative to the observational data item verifies the equation:

$$W_j(y_n, L^n, \theta, G) = \exp\left( \frac{1}{2}\sum_{m=1}^{N} q_m^j L_m^n - \frac{|y_n - Ge^{+i\theta}Q_j|^2}{\sigma_b^2} \right)$$

wherein:

exp denotes the exponential function;
denotes the $m^{th}$ bit of the symbol $Q_j$ of the QAM modulation;
denotes the log-likelihood value of the observational data item on the $m^{th}$ bit of the $n^{th}$ QAM symbol;
$L^n$ denotes the list of log-likelihood values over all the bits, ;
denotes the power of the noise for the transmission channel under consideration;
$\theta$ denotes the estimated phase argument;
G denotes the estimated gain.

**15.** Process according to one of claims 8 to 14, **characterised in that** each execution step of the adaptive process is repeated over a specified number of iterations.

**16.** Process for estimating phase and/or gain according to one of the preceding claims 1 to 13 in mono-carrier or multi-carrier transmission.

**17.** Process according to claim 16, **characterised in that** in the case of a multi-carrier transmission,

$\alpha$) the process is carried out independently over a reduced number of sub-carriers that make up the multi-carrier system; and
$\beta$) the gain and/or phase values are interpolated with the other sub-carriers of the multi-carrier system, by reason of the frequency values of the sub-carriers under consideration.

**18.** Gain-phase loop for adaptive estimation of the gain and/or phase of a current observational data item relative to the gain and/or phase of a previous observational data item, relative to a set of symbols transmitted in QAM modulation by a transmission channel, on the basis of the likelihood probability value expressed in terms of log-likelihood of each observational data item relative to all the bits that make up these symbols, **characterised in that** the said gain-phase loop comprises at least:

- summing means that receive at their summation input the phase or gain parameter, respectively, for the previous observational data item and a corrective term for the phase or gain argument, respectively, and delivering the estimated phase or gain parameter, respectively, for the current observational data item;
- a functional phase and/or gain argument module in cascade with a filtering module, said functional phase and/or gain module receiving the said respective phase or gain parameters for the previous observational data item, the said current observational data item and the list of log-likelihood values over all the bits of the observational data item relative to each symbol of the QAM modulation and delivering to said filtering module a value proportional to the value of the measured phase argument of the current observational data item weighted by the significance or confidence value of this current observational data item relative to all the symbols of the QAM modulation or, respectively, a value proportional to the relative gain deviation value of the current observational data item and the estimated gain of the previous observational data item relative to a given symbol of the QAM modulation, weighted by the significance or confidence value expressed in terms of log-likelihood attributed to the symbol relative to all these symbols, the said filter delivering the said corrective term for the phase argument and/or gain element to said summing means.

19. Receiver of digital observational data transmitted by QAM modulation over a transmission channel, **characterised in that** it comprises at least in combination, at the input to the complex demodulator, a gain and phase processing module that makes it possible to apply the phase shift and estimated gain value for the current observation period, a flexible demapper and a turbo-decoder, the said turbo-decoder delivering the flexible information, the list of log-likelihood values attributed to the symbol $Q_j$ relative to the observational data, a gain-phase loop, according to claim 18.

20. Receiver according to claim 19, **characterised in that,** for transmission of the observational data with interleaving of the QAM symbols transmitted, the said receiver comprises:

- a de-interleaving module placed upstream of the turbo-decoder;
- an interleaving module placed upstream of said gain-phase loop, thus making it possible to lift the phase ambiguity relating to the observational data received.

**Patentansprüche**

1. Verfahren zur Schätzung der Parameter der Phase und/oder der Verstärkung von Beobachtungsdaten, die entsprechend einer Abfolge numerischer Symbole gespeichert werden, die gebildet werden durch eine Bitfolge in QAM-Modulation, die durch einen Übertragungskanal übertragen wird, umfassend die folgenden Schritte:

a) Durchführung einer iterativen Schätzung der Parameter der Phase und/oder der Verstärkung von einer Abfolge von Beobachtungsdaten an, welche iterative Schätzung durchgeführt wird gemäß einer Regel der Phase und/oder der spezifischen Verstärkung des QAM-Modulationstyps und an die geschätzte Phase der aufeinanderfolgenden Beobachtungsdaten der Sequenz gebunden ist;
b) Durchführung eines adaptiven Schätzungsprozesses mit zumindest einer Schätzungsfunktion der Parameter der Phase und/oder der Verstärkung in Abhängigkeit vom Wert der Wahrscheinlichkeit, ausgedrückt als Log-Wahrscheinlichkeit,

**gekennzeichnet** zumindest durch:

c) Initialisierung zumindest des adaptiven Schätzungsprozesses der Parameter der Phase und/oder der Verstärkung von zumindest den aufeinanderfolgenden geschätzten Werten der Phase und/oder der Verstärkung der Beobachtungsdaten, wobei der Wahrscheinlichkeitswert berechnet wird für jedes Beobachtungsdatum bezüglich der Anordnung der aufeinanderfolgenden Bits der Symbole.

2. Verfahren gemäß Anspruch 1, **dadurch gekennzeichnet, dass** die Regel der Phase und/oder der spezifischen Verstärkung der folgenden Beziehung genügt:

$$\varphi_k = \varphi_{k-1} + \gamma F(y_k, \varphi_{k-1}); \ G_k = G_{k-1} + \gamma G(y_k, G_{k-1})$$

wobei:

den geschätzten Phasenwert des Beobachtungsdatums $y_k$ bzw. $y_{k-1}$ mit dem jeweiligen Rang k und k-1 bezeichnet;
$G_k, G_{k-1}$ dem geschätzten Verstärkungswert des Beobachtungsdatums $y_k$ bzw. $y_{k-1}$ mit dem jeweiligen Rang k und k-1 bezeichnet;
F und G jeweils eine spezifische Funktion in Abhängigkeit vom benutzten Modulationstyp QAM bezeichnen;

$\gamma$ eine vorbestimmte Filterfunktion bezeichnet.

3. Verfahren gemäß Anspruch 1 oder 2, **dadurch gekennzeichnet, dass** der adaptive Schätzungsprozeß eine iterative Schätzfunktion zur Schätzung der Phase bzw. der Verstärkung beinhaltet, geschätzt für jedes Beobachtungsdatum $\gamma_k$ des Ranges k bezüglich aller Symbole der betrachtete QAM-Modulation, bezüglich der Wahrscheinlichkeit, ausgedrückt als log-Wahrscheinlichkeit jedes Observationsdatums bezüglich der Gesamtheit der Bits der Symbole.

4. Verfahren gemäß Anspruch 3, **dadurch gekennzeichnet, dass** die iterative Funktion zur Schätzung der Phase jedes Beobachtungsdatums der Beziehung genügt:

$$\varphi_k = \varphi_{k-1} + \gamma \frac{\sum_{j=1}^{M} \mathrm{Im}(y_k \overline{Q_j} e^{-i\varphi k-1}) W_j(y_k, L^k, \varphi_{k-1})}{\sum_{j=1}^{M} W_j(y_k, L^k, \varphi_{k-1})}$$

wobei:

$\gamma$ die vorbestimmte Filterfunktion bezeichnet; und
den Imaginärteil der komplexen Zahl bezeichnet, die das Produkt des Beobachtungsdatums $\gamma_k$ des Ranges k und des konjugierten Symbols des Symbols $Q_j$ bezeichnet, korrigiert durch das Argument der Phase $\varphi_{k-1}$, die durch vorhergehende Iteration geschätzt wird;
das Gewicht oder den Vertrauenswert bezeichnet, ausgedrückt in Wahrscheinlichkeiten, zugeordnet dem Symbol $Q_j$ bezüglich des Beobachtungsdatums.

5. Verfahren gemäß Anspruch 3 oder 4, **dadurch gekennzeichnet, dass** die iterative Funktion zur Schätzung der Verstärkung jedes Beobachtungsdatums der folgenden Beziehung genügt:

$$G_k = G_{k-1} + \gamma \frac{\sum_{j=1}^{M} (\mathrm{Re}(y_k \overline{Q_j}) - G_{k-1}|Q_j|^2) W_j(y_k, L^k, G_{k-1})}{\sum_{j=1}^{M} W_j(y_k, L^k, G_{k-1})}$$

wobei:

$\gamma$ die vorbestimmte Filterfunktion bezeichnet;
den Realteil der komplexen Zahl bezeichnet, die das Produkt des Beobachtungsdatums $y_k$ des Ranges k und des konjugierten Symbols des Symbols $Q_j$ bezeichnet;
das Gewicht oder den Vertrauenswert bezeichnet, ausgedrückt in Wahrscheinlichkeiten, zugeordnet dem Symbol $Q_j$ bezüglich des Beobachtungsdatums.

6. Verfahren gemäß einem der Ansprüche 1 bis 5, **dadurch gekennzeichnet, dass** zur Schätzung der Phase das Gewicht oder Vertrauenswert, ausgedrückt als Wahrscheinlichkeit bezüglich des Symbols $Q_j$ gegenüber dem Beobachtungsdatum, der Beziehung genügt:

$$Wj(y_n, L^n, \theta) = \exp\left(\frac{1}{2} \sum_{m=1}^{N} q_m^j L_m^n - \frac{|y_n - e^{+i\theta} Q_j|^2}{\sigma_b^2}\right),$$

wobei:

exp die Exponentialfunktion bezeichnet;

das m-te Bit des Symbols $Q_j$ der QAM-Modulation bezeichnet;

den Wert der log-Wahrscheinlichkeit des Beobachtungsdatums auf dem m-ten Bit des I-ten Symbols QAM bezeichnet;

$L^n$ die Liste der Werte der log-Wahrscheinlichkeiten auf allen Bits bezeichnet,

die Stärke des Rauschens auf dem betrachteten Übertragungskanal bezeichnet;

$\theta$ das Argument der geschätzten Phase bezeichnet.

**7.** Verfahren gemäß einem der Ansprüche 1 bis 6, **dadurch gekennzeichnet, dass** für eine Schätzung der Verstärkung das Gewicht oder der Vertrauenswert, ausgedrückt als Wahrscheinlichkeit , die dem Symbol $Q_j$ bezüglich dem Beobachtungsdatum zugeordnet ist, der Beziehung genügt:

$$W_j(y_n, L^n, G) = \exp\left(\frac{1}{2}\sum_{m=1}^{N} q_m^j L_m^n - \frac{|y_n - GQ_j|^2}{\sigma_b^2}\right),$$

wobei:

exp die Exponentialfunktion bezeichnet;

das m-te Bit des Symbols $Q_j$ der QAM-Modulation bezeichnet;

der Wert der log-Wahrscheinlichkeit des Beobachtungsdatums auf den m-ten Bit des n-ten QAM-Symbols bezeichnet;

$L^n$ die Liste der Werte der log-Wahrscheinlichkeiten auf allen Bits bezeichnet,

die Stärke des Rauschens auf dem betrachteten Übertragungskanal bezeichnet;

G den Wert der geschätzten Verstärkung bezeichnet.

**8.** Verfahren gemäß einem der Ansprüche 1 bis 4, **dadurch gekennzeichnet, dass** zur Schätzung des Parameters der Phase gemäß einem Schritt o) zur Durchführung einer iterativen Schätzung des Parameters der Phase gemäß einer Regel zur Zuordnung der geschätzten Phase zu aufeinanderfolgenden Beobachtungsdaten der Abfolge folgendes durchgeführt wird:

-b1) Initialisierung eines ersten adaptiven Prozesses durch Festlegung der ersten Werte des adaptiven Prozesses, wodurch der letzte Phasenwert geschätzt wird;

-b2) Durchführung eines ersten adaptiven Prozesses mit zumindest einer Schätzfunktion der Parameter der Phase in Abhängigkeit von dem Wahrscheinlichkeitswert, ausgedrückt durch die log-Wahrscheinlichkeit jedes Beobachtungsdatums bezüglich der Anordnung der Bits, welche die Symbole bilden, zur Beschreibung durch Lesen der Beobachtungsdaten $y_k$ des Ranges k in einer Richtung einer ersten Abfolge von aufeinanderfolgenden Mittelwerten geschätzter Phasenverschiebungen, $\varphi_0$ bis $\varphi_k$;

-b3) Initialisierung eines zweiten adaptiven Prozesses zur Festlegung der ersten Werte des zweiten adaptiven Prozesses, vom letzten Mittelwert der geschützten Phasenverschiebung, die erhalten wird durch Ausführung des ersten adaptiven Prozesses;

-b4) Ausführung des zweiten adaptiven Prozesses mit zumindest einer Schätzfunktion der Parameter der Phase entsprechend dem Wert der Wahrscheinlichkeit, ausgedrückt durch die log-Wahrscheinlichkeit für jedes Beobachtungsdatum bezüglich der Anordnung der Bits, welche die Symbole bilden, zur Beschreibung durch Lesen der Beobachtungsdaten $y_k$ des Ranges k in umgekehrter Reihenfolge einer zweiten Abfolge aufeinanderfolgender Mittelwerte geschätzter Phasenverschiebungen, $\varphi'_{k-1}$ bis $\varphi'_o$;

-b5) Berechnen eines letzten geschätzten Phasenverschiebungswertes $\varphi''_k$ für ein Beobachtungsdatum $y_k$ des Ranges k als eine Kombination des ersten und des zweiten Phasenverschiebungswertes des gleichen Ranges k gemäß der Beziehung:

$$\varphi''_k = g(\varphi_k, \varphi'_k).$$

**9.** Verfahren gemäß den Ansprüchen 4 bis 8, **dadurch gekennzeichnet, dass** der erste und der zweite adaptive Prozeß durchgeführt werden mittels einer ersten bzw. einer zweiten Phasenschleife gemäß der Beziehung:

$$\varphi_k = \varphi_{k+\varepsilon} + \gamma \frac{\sum_{j=1}^{M} \operatorname{Im}(y_k \overline{Q}_j e^{-i\varphi k+\varepsilon}) W_j(y_k, L^k, \varphi_{k+\varepsilon})}{\sum_{j=1}^{M} W_j(y_k, L^k, \varphi_{k+\varepsilon})}$$

mit $\varepsilon = -1$ für den ersten adaptiven Prozeß, und $\varepsilon = +1$ für den zweiten adaptiven Prozeß.

**10.** Verfahren gemäß einem der Ansprüche 1 bis 5, **dadurch gekennzeichnet, dass** zur Schätzung des Parameters der Verstärkung gemäß einem Schritt o) die iterative Schätzung des Verstärkungsparameters gemäß einer bestimmten Verstärkungsregel durchgeführt wird, aufgrund welcher die geschätzte Ver-stärkung aus den aufeinanderfolgenden Beobachtungsdaten gemäß der Sequenz wie folgt geschätzt wird:

-c1) Initialisierung eines ersten adaptiven Prozesses zur Festlegung der ersten Werte des ersten adaptiven Prozesses, nach welchen der letzte Verstärkungswert geschätzt wird;

-c2) Durchführung des ersten adaptiven Prozesses mit zumindest einer Schätzfunktion der Verstärkungsparameter in Abhängigkeit von der Wahrscheinlichkeit, ausgedrückt als log-Wahrscheinlichkeit, für jedes Beobachtungsdatum bezüglich der Anordnung der Bits, welche die Symbole bilden, zur Bildung durch Lesen der Beobachtungsdaten $y_k$ des Ranges k in einer Richtung einer Folge von aufeinanderfolgenden Mittelwerten der Verstärkung $G_0$ bis $G_K$;

-c3) Initialisierung eines zweiten adaptiven Prozesses zur Festlegung der ersten Werte des zweiten adaptiven Prozesses, von einem letzten geschätzten Verstärkungswert, der durch Ausführung des ersten adaptiven Prozesses erhalten wird;

-c4) Ausführung des zweiten adaptiven Prozesses mit zumindest einer Schätzfunktion für die Verstärkungsparameter in Abhängigkeit von dem Wahrscheinlichkeitswert, ausgedrückt als log-Wahrscheinlichkeit, für jedes Beobachtungsdatum bezüglich der Anordnung der Bits, welche die Symbole bilden, zur Bildung durch Lesen der Beobachtungsdaten $y_k$ des Ranges k in umgekehrter Reihenfolge einer zweiten Folge aufeinanderfolgender Mittelwerte der Verstärkung $G'_{k-1}$ bis $G'_o$;

-c5) Berechnung des letzten geschätzten Verstärkungwerts $G''_K$ für jedes Beobachtungsdatum $y_k$ des Ranges k gemäß einer Kombination des ersten und des zweiten Verstärkungswerts des Ranges k gemäß der Beziehung:

$$G''_k = g(G_k, G'_k).$$

**11.** Verfahren gemäß den Ansprüchen 5 bis 10, **dadurch gekennzeichnet, dass** der erste und der zweite adaptive Prozeß durchgeführt werden durch Mittlung einer ersten bzw. einer zweiten Verstärkungsschleife gemäß der Beziehung:

$$G_k = G_{k+\varepsilon} + \gamma \frac{\sum_{j=1}^{M} (\operatorname{Re}(y_k \overline{Q}_j) - G_{k+\varepsilon} |Q_j|^2) W_j(y_k, L^k, G_{k+\varepsilon})}{\sum_{j=1}^{M} W_j(y_k, L^k, G_{k+\varepsilon})}$$

mit $\varepsilon = -1$ für den ersten adaptiven Prozeß, und $\varepsilon = +1$ für den zweiten adaptiven Prozeß.

**12.** Verfahren gemäß einem der Ansprüche 1 bis 7, **dadurch gekennzeichnet, dass** für eine verbundene Schätzung der Parameter der Verstärkung und der Phase folgende Schritte durchgeführt werden:

o') Durchführung einer iterativen Schätzung der Parameter der Verstärkung und/oder der Phase von einer Abfolge der Beobachtungsdaten, welche iterative Schätzung durchgeführt wird von einer Schleife der Verstärkung-Phase, welcher Schritt der iterativen Schätzung durchgeführt wird zur Schätzung der Verstärkung und der Phase für jedes Beobachtungsdatum bezüglich der Symbole der QAM-Modulation;

d1) Initialisierung eines ersten adaptiven Prozesses zur Festlegung der ersten Werte der Verstärkung $G_0$ und der geschätzten Phase $\varphi_0$;

d2) Durchführung des ersten adaptiven Prozesses mit zumindest einer Schätzfunktion der Parameter der Verstärkung und der Phase in Abhängigkeit von der Wahrscheinlichkeit, ausgedrückt als log-Wahrscheinlichkeit, für jedes Beobachtungsdatum bezüglich der Anordnung der Bits, welche die Symbole bilden, zur Erzeugung durch Lesen der Beobachtungsdaten $y_k$ des Ranges k in einer Richtung einer ersten Abfolge von aufeinanderfolgenden Mittelwerten der Verstärkungswerte $G_0$ bis $G_K$ und entsprechend der Phase $\varphi_0$ bis $\varphi_k$;

d3) Initialisierung eines zweiten adaptiven Prozesses zur Festlegung der ersten Werte des zweiten adaptiven Prozesses, vom letzten Wert der Verstärkung bzw. der Phase an, welche erhalten werden durch Durchführung des ersten adaptiven Prozesses,

d4) Durchführung des zweiten adaptiven Prozesses mit zumindest einer Schätzfunktion der Parameter der Verstärkung bzw. der Phase in Abhängigkeit von dem Wert der Wahrscheinlichkeit, ausgedrückt als log-Wahrscheinlichkeit, für jedes Beobachtungsdatum bezüglich der Anordnung der Bits, welche die Symbole bilden, zur Erzeugung durch Lesen der Beobachtungsdaten $y_k$ des Ranges k in umgekehrter Reihenfolge, einer zweiten Abfolge von aufeinanderfolgenden Mittelwerten der Verstärkung bzw. der Phase $G'_{k-1}$ bis $G'_o$ bzw. $\varphi'_{k-1}$ bis $\varphi'_o$;

d5) Berechnen des letzten Wertes der Verstärkung bzw. der Phase für jedes Beobachtungsdatum $y_k$ des Ranges k gemäß einer Kombination des ersten und des zweiten Mittelwertes der Verstärkung bzw. der Phase des gleichen Ranges k gemäß der Beziehung:

$$G''_k = g(G_k, G'_k)$$

$$\varphi''_k = g(\varphi_k, \varphi'_k)$$

in welcher Beziehung g eine spezifische Funktion bezeichnet.

13. Verfahren gemäß Anspruch 12, **dadurch gekennzeichnet, dass** die ersten und zweiten adaptiven Prozesse durchgeführt werden gemäß einer Schleife der Verstärkung-Phase gemäß der Beziehung

$$\varphi_k = \varphi_{k+\varepsilon} + \gamma_1 \frac{\sum_{j=1}^{M} \text{Im}(y_k \overline{Q_j}) G_{k+\varepsilon} e^{-i\varphi k+\varepsilon}) W_j(y_k, L^k, \varphi_{k+\varepsilon}, G_{k+\varepsilon})}{\sum_{j=1}^{M} W_j(y_k, L^k, \varphi_{k+\varepsilon}, G_{k+\varepsilon})}$$

$$G_k = G_{k+\varepsilon} + \gamma_2 \frac{\sum_{j=1}^{M} (\text{Re}(y_k \overline{Q_j} e^{-i\varphi k+\varepsilon}) - G_{k+\varepsilon} |Q_j|^2) W_j(y_k, L^k, \varphi_{k+\varepsilon}, G_{k+\varepsilon})}{\sum_{j=1}^{M} W_j(y_k, L^k, \varphi_{k+\varepsilon}, G_{k+\varepsilon})}$$

mit $\varepsilon$ = -1 für den ersten adaptiven Prozeß, und $\varepsilon$ = +1 für den zweiten adaptiven Prozeß, und $y_1$ und $y_2$ eine spezifische Filterfunktion bezeichnen, die als Funktion vom Modulationstyp QAM gewählt wird.

14. Verfahren gemäß einem der Ansprüche 12 oder 13, **dadurch gekennzeichnet, dass** für eine gemeinsame Schätzung der Verstärkung und der Phase das Gewicht oder der Vertrauenswert, ausgedrückt als Wahrscheinlichkeit, die dem Symbol $Q_j$ bezüglich dem Beobachtungsdatum zugeordnet ist, der Beziehung genügt:

$$W_j(y_n, L^n, \theta, G) = \exp\left( \frac{1}{2} \sum_{m=1}^{N} q_m^j L_m^n - \frac{\left| y_n - Ge^{+i\theta}Q_j \right|^2}{\sigma_b^2} \right),$$

wobei:

exp die Exponentialfunktion bezeichnet;
das m-te Bit des Symbols $Q_j$ der QAM-Modulation bezeichnet;
den Wert der log-Wahrscheinlichkeit des Beobachtungsdatums auf dem m-ten Bit des n-ten QAM-Symbols bezeichnet;
$L^n$ die Liste der Werte der log-Wahrscheinlichkeit auf allen Bits bezeichnet, ;
die Stärke des Rauschens auf dem betrachteten Übertragungskanal bezeichnet;
θ das Argument der geschätzten Phase bezeichnet;
G den Wert der geschätzten Verstärkung bezeichnet.

15. Verfahren gemäß einem der Ansprüche 8 bis 14, **dadurch gekennzeichnet, dass** jeder Schritt der Ausführung des adaptiven Prozesses in einer Anzahl vorbestimmter Iterationen wiederholt wird.

16. Verfahren zur Schätzung der Phase und/oder der Verstärkung gemäß einem der Ansprüche 1 bis 13, in einkanaliger Übertragung oder in mehrkanaliger Übertragung.

17. Verfahren gemäß Anspruch 16, **dadurch gekennzeichnet, dass** im Fall einer mehrkanaligen Übertragung

α) das Verfahren unabhängig auf einer reduzierten Anzahl von Unterkanälen durchgeführt wird, die das Multikanal-System bilden; und
β) man die Werte der Verstärkung und/oder der Phase auf die anderen Unterkanäle des Multikanal-Systems interpoliert, aufgrund von betrachteten Werten der Frequenzen der Unterkanäle.

18. Schleife zur adaptiven Verstärkungs-Phasenschätzung der Verstärkung und/oder der Phase eines fortlaufenden Beobachtungsdatums bezüglich der Verstärkung und/oder der Phase eines vorhergehenden Beobachtungsdatums, bezüglich einer Anordnung von Symbolen, die durch QAM-Modulation durch einen Übertragungskanal übertragen werden, von einem Wahrscheinlichkeitswert, ausgedrückt als log-Wahrscheinlichkeit, jedes Beobachtungsdatums bezüglich der Gesamtheit von Bits, die diese Symbole bilden, **dadurch gekennzeichnet, dass** die Verstärkungs-Phasen-Schleife zumindest umfaßt:

- Summierungsmittel, die am Eingang der Summierung den Parameter der Phase bzw. der Verstärkung für das vorhergehende Beobachtungsdatum empfangen und einen Korrekturterm der Phase bzw. der Verstärkung, und welche den geschätzten Parameter der Phase bzw. der Verstärkung für das nächste Beobachtungsdatum liefern;
- ein Funktionsmodul des Arguments der Phase und/oder der Verstärkung, das kaskadenartig mit einem Filtermodul angeordnet ist, welches Funktionsmodul der Phase und/oder der Verstärkung die Parameter der Phase bzw. der Verstärkung für das vorhergehende Beobachtungsdatum, das folgende Beobachtungsdatum und die Liste der Werte der log-Wahrscheinlichkeit auf allen Bits des Beobachtungsdatums bezüglich jedes Symbols der QAM-Modulation empfängt und an das Filtermodul einen Wert liefert, der proportional ist zum Wert des Arguments der gemessenen Phase des folgenden Beobachtungsdatums, gewichtet durch das Gewicht oder den Vertrauenswert dieses folgenden Beobachtungsdatums bezüglich der Anordnung der Symbole der QAM-Modulation, bzw. einen Wert proportional zum Wert der Abweichung der relativen Verstärkung des folgenden Beobachtungsdatums und der geschätzten Verstärkung des vorhergehenden Beobachtungsdatums bezüglich eines Symbols, das durch die QAM-Modulation gegeben ist, gewichtet durch das Gewicht oder den Vertrauenswert, ausgedrückt als log-Wahrscheinlichkeit, zugeordnet dem Symbol bezüglich der Anordnung der Symbole, welcher Filter den Korrekturterm des Arguments der Phase und/oder des Elements der Verstärkung an die Summierungsmittel liefert.

19. Empfänger numerischer Beobachtungsdaten, die in QAM-Modulation auf einem Übertragungskanal übertragen werden, **dadurch gekennzeichnet, dass** er zumindest in Kombination am Eingang des komplexen Demodulators ein Behandlungsmodul der Verstärkung und der Phase umfaßt, zur Anwendung des Phasenverschiebungswertes und der geschützten Verstärkung während der Dauer der folgenden Beobachtung, und einen flexiblen Demapper und einen Turbodecoder, welcher Turbodecoder flexible Informationen liefert, als Liste der Werte der log-Wahrscheinlichkeit, zugeordnet dem Symbol $Q_j$ bezüglich der Beobachtungsdaten, und eine Verstärkungs-Phasen-Schleife, gemäß Anspruch 18.

20. Empfänger gemäß Anspruch 19, **dadurch gekennzeichnet, dass** er für eine Sendung der Beobachtungsdaten mit Verschachtelung der ausgesendeten QAM-Symbole umfaßt:

- ein Entschachtelungsmodul, das vor dem Turbodecoder angeordnet ist;
- ein Verschachtelungsmodul, das vor der Verstärkungs-Phasen-Schleife angeordnet ist, welche es ermöglicht, eine Anhebung der Zweideutigkeit der Phase auf den empfangenen Beobachtungsdaten durchzuführen.

Modulation BPSK

## FIG.1 (art antérieur)

EP 1 792 463 B1

$y_k, \varphi_k, G_k$
$k \in [0, N]$

Estimation itérative

$\varphi_k = \varphi_{k-1} + \gamma F(y_k, \varphi_{k-1})$

$G_k = G_{k-1} + \gamma G(y_k, G_{k-1})$

$\qquad A$

$B = B+1$

-Initialisation par
au moins $\varphi_N, G_N$ de
$AE\emptyset(\varphi_k, \varphi_{k-1} L^k)$
$AEG(G_k, G_{k-1}, L^k)$
-Exécution de
$AE\emptyset(\varphi_k, \varphi_{k-1}, L^k)$
$AEG(G_k, G_{k-1}, L^k)$

$\qquad B$

$[Y_k]$
$[G_k]$ $k \in [0, K]$

## FIG.2a

Initialisation
$AE\emptyset: \varphi_k = \varphi_{k-1} + CArg_k(Im_k, W_j)$
$AEG: G_k = G_{k-1} + CM_k(Re_k, W_j)$

$\qquad B_1$

-Exécution de
$AE\emptyset$
$AEG$

$\qquad B_2$

$\qquad B$

## FIG.2b

$$\text{Mémorisation bloc} \atop +A \qquad 0$$

$$\text{Initialisation} \atop AEØ_1 \qquad b_1$$

$$b_2' \qquad R=R+1 \qquad \text{Exécution} \atop AEØ_1 \qquad b_2$$

$$\text{Initialisation} \atop AEØ_2 \qquad b_3$$

$$B=B+1$$

$$b_4' \qquad R'=R'+1 \qquad \text{Exécution} \atop AEØ_2 \qquad b_4$$

$$\text{Combinaison} \qquad b_5$$

$$\text{Fin bloc} \qquad b_6$$

## FIG.3a

**FIG.3b**

```
                    ┌─────────────────────┐
          ┌────────→│  Mémorisation bloc  │⌇─── O'
          ┊         │        +A'          │
          ┊         └──────────┬──────────┘
          ┊                    │
          ┊                    ▼
          ┊         ┌─────────────────────┐
          ┊         │    Initialisation   │⌇─── d₁
          ┊         │       AEGØ₁         │
          ┊         └──────────┬──────────┘
          ┊     d'₂            ┊
          ┊      ╲       ┌ ─ ─ ┊→
          ┊       ╲      ┊     │
          ┊     ┌─┴──────┴┐    ▼
          ┊     ┊ R=R+1   ┊    ┌─────────────────────┐
          ┊     └─┬───────┘    │     Exécution       │⌇─── d₂
          ┊       ↑            │       AEGØ₁         │
          ┊       └┄┄┄┄┄┄┄┄┄┄┄┄└──────────┬──────────┘
          ┊                    │
          ┊                    ▼
        ┌─┴───────┐  ┌─────────────────────┐
        ┊ B=B+1   ┊  │    Initialisation   │⌇─── d₃
        └─┬───────┘  │       AEGØ₂         │
          ↑          └──────────┬──────────┘
          ┊     d'₄            ┊
          ┊      ╲       ┌ ─ ─ ┊→
          ┊       ╲      ┊     │
          ┊     ┌─┴──────┴┐    ▼
          ┊     ┊ R'=R'+1 ┊    ┌─────────────────────┐
          ┊     └─┬───────┘    │     Exécution       │⌇─── d₄
          ┊       ↑            │       AEGØ₂         │
          ┊       └┄┄┄┄┄┄┄┄┄┄┄┄└──────────┬──────────┘
          ┊                    │
          ┊                    ▼
          ┊          ┌─────────────────────┐
          ┊          │     Combinaison     │⌇─── d₅
          ┊          └──────────┬──────────┘
          ┊                     │
          ┊                     ▼
          ┊          ┌─────────────────────┐
          └┄┄┄┄┄┄┄┄┄┄│      Fin bloc       │⌇─── d₆
                     └─────────────────────┘
```

## FIG.4a

FIG.3c

FIG.4b

FIG.5a

FIG.5b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2004036753 A

**Littérature non-brevet citée dans la description**

- **CIONI et al.** Turbo embedded estimation with imperfect phase/frequency recovery. *IEEE International Conference on Communication,* 05 Mai 2003, vol. 1